# EUROPÄISCHE PATENTSCHRIFT

(11) **EP 2 871 469 B1**
(45) Veröffentlichungstag und Bekanntmachung des Hinweises auf die Patenterteilung: **03.10.2018**
(21) Anmeldenummer: 13191973.0
(22) Anmeldetag: 07.11.2013
(51) Int. Cl.: G01N 27/02, D06F 39/00

(54) **Verfahren und Vorrichtung zur Bestimmung der Konzentration von Mizellen mittels Impedanzspektroskopie**
Method and device for determining micelle concentrations using impedance spectroscopy
Procédé et dispositif destinés à la détermination de la concentration de micelles par spectroscopie d'impédance électrochimque

(43) Veröffentlichungstag der Anmeldung: 13.05.2015
(73) Patentinhaber: Seuffer GmbH & Co. KG, 75365 Calw-Hirsau (DE)
(72) Erfinder: Gruden, Roman, 75180 Pforzheim (DE)
(74) Vertreter: Winter, Brandl, Fürniss, Hübner, Röss, Kaiser, Polte - Partnerschaft mbB

(56) Entgegenhaltungen:
- DE-A1- 4 311 064
- DE-A1- 10 042 846
- DE-C1- 19 511 556
- DE-U1-202011 101 482
- CHANG HONG-CHI ET AL: "Measurement of critical micelle concentration of nonionic surfactant solutions using impedance spectroscopy technique", REVIEW OF SCIENTIFIC INSTRUMENTS, AIP, MELVILLE, NY, US, Bd. 69, Nr. 6, 1. Juni 1998 (1998-06-01), Seiten 2514-2520, XP012036644, ISSN: 0034-6748, DOI: 10.1063/1.1148951
- ROMAN GRUDEN ET AL: "Influence of surface effects on the characteristic curves of detergent sensors", 2012 9TH INTERNATIONAL MULTI-CONFERENCE ON SYSTEMS, SIGNALS AND DEVICES (SSD 2012) : CHEMNITZ, GERMANY, 20 - 23 MARCH 2012, IEEE, PISCATAWAY, NJ, 20. März 2012 (2012-03-20), Seiten 1-6, XP032180278, DOI: 10.1109/SSD.2012.6198053 ISBN: 978-1-4673-1590-6
- ROMAN GRUDEN ET AL: "Reproducibility investigation of sensors for analysis of aqueous solutions", SYSTEMS, SIGNALS&DEVICES (SSD), 2013 10TH INTERNATIONAL MULTI-CONFERENCE ON, IEEE, 18. März 2013 (2013-03-18), Seiten 1-4, XP032439827, DOI: 10.1109/SSD.2013.6564148 ISBN: 978-1-4673-6459-1
- HELINANDO P. DE OLIVEIRA ET AL: "Use of Electrical Impedance Spectroscopy as a Practical Method of Investigating the Formation of Aggregates in Aqueous Solutions of Dyes and Surfactants", THE JOURNAL OF PHYSICAL CHEMISTRY B, Bd. 115, Nr. 21, 2. Juni 2011 (2011-06-02) , Seiten 6903-6908, XP055067294, ISSN: 1520-6106, DOI: 10.1021/jp200644y

## Beschreibung

Die vorliegende Erfindung betrifft ein Verfahren und eine Vorrichtung zur Bestimmung einer Konzentration von Mizellen in einem wässrigen Medium, und insbesondere ein Verfahren und eine Vorrichtung zur Bestimmung einer kritischen Mizellbildungskonzentration in einer Waschlauge.

Zur Einsparung von Reinigungsmitteln und zur umweltschonenden Durchführung von Waschvorgängen besteht in privaten Haushalten und in industriellen Anwendungen zunehmend ein Informationsbedarf hinsichtlich der während eines Waschvorgangs sich ändernden Eigenschaften von Waschlaugen, und hier im Allgemeinen von wässrigen Lösungen mit Reinigungsmitteln zur Durchführung bestimmter Reinigungsmaßnahmen. Die Reinigungsmaßnahmen erfolgen im Wesentlichen in Verbindung mit fluiden Medien, wie beispielsweise einer wässrigen Lösung (Waschlauge) in Verbindung mit einer Wascheinrichtung. Die Erfassung der Eigenschaften eines jeweiligen fluiden Mediums (einer Reinigungsflüssigkeit) ist erforderlich zur Bestimmung der grundlegenden Möglichkeiten beim Einsatz dieser Medien im Sinne eines Reinigungsvorgangs, wobei entsprechend der gewonnenen Information in Form von Messwerten bestimmter Parameter und den daraus bei der Auswertung gewonnenen Erkenntnissen bestimmt werden kann, ob das betreffende fluide Medium, das während der Benutzung einer ständigen Änderung unterliegt, in seinem derzeitigen Zustand noch bestimmte Anforderungen hinsichtlich einer effektiven Reinigung erfüllen kann und ob die Konzentration von Reinigungs- oder Waschmitteln ausreichend ist.

Neben dem Aspekt einer wirksamen Reinigung stehen zunehmend Aspekte einer wirtschaftlichen Durchführung der Reinigung sowie Umweltschutzaspekte im Vordergrund. Dies betrifft die verwendete Menge an Frischwasser im Falle der Fluide bzw. wässrigen Medien, die erforderliche Menge an bestimmten (oder auch mehreren) Reinigungsmitteln sowie die Dauer der Reinigung insbesondere im Hinblick auf den Einsatz elektrischer Energie (Waschdauer, Waschtemperatur). Hierzu weisen moderne Waschgeräte (Waschmaschinen, Wascheinrichtungen und im weiteren Sinne auch Geschirrspüler) bereits werkseitig entsprechende Reinigungsprogramme mit Spareffekten bezüglich eines verminderten Energie- und Waschmittelverbrauchs auf.

Im Hinblick auf Untersuchungen am Beispiel einer Waschlauge werden nachstehend bekannte Verfahren und Vorrichtungen genannt.

Die Druckschrift DD 217 557 A1 offenbart ein Verfahren und eine zugehörige Vorrichtung zur Regelung der Zugabe (d. h. der eingesetzten Menge) von Reinigungs- oder Spülmitteln in Waschgeräten, wobei in dem Waschgerät zur physikalisch-chemischen Bestimmung der Waschlauge unterschiedliche Sensoren angeordnet sind. Einer der mehreren Sensoren kann beispielsweise auf eine Tensidkonzentration ansprechen. Über eine der Auswertung der Ausgangssignale dienende elektronische Schaltung wird im Allgemeinen eine Änderung der Ausgangssignale (Messsignale) und insbesondere ein Anstieg derselben während der Zugabe von Reinigungs- oder Spülmitteln erfasst. In Verbindung mit tensidhaltigen Waschlaugen können beispielsweise die Oberflächenspannung, die elektrische Leitfähigkeit und dergleichen als eine charakteristische Änderung von Ausgangssignalen der Sensoren in Abhängigkeit von der Tensidkonzentration aufgrund der Waschmittelmenge dienen. In Verbindung mit einer entsprechenden Auswertung kann hieraus eine Waschmitteldosierung für das entsprechende Wasch- oder Reinigungsgerät eingestellt oder gesteuert werden.

Die Druckschrift DE 197 55 418 A1 offenbart ein Sensorelement sowie eine Vorrichtung zur Messung komplexer Impedanzen in Materialien, wobei das Sensorelement zwei Elektroden aufweist, die aus einem leitfähigen Material bestehen und die in einem vorbestimmten Abstand zueinander angeordnet und dem zu überprüfenden Material ausgesetzt sind. Die beiden Elektroden sind mit einer dünnen Isolierschicht überzogen, die eine im Vergleich zu dem vorbestimmten Abstand der Elektroden geringe Schichtdicke aufweist. Das gebildete Sensorelement ist gegenüber Störungen weitgehend unempfindlich. In einer Auswerteschaltung werden die Ausgangssignale der Sensoren einer weiteren Verarbeitung unterzogen, und es kann bei dieser Verarbeitung eine Analyse der Eigenschaften der jeweils zwischen den Elektroden angeordneten Materialien (Flüssigkeiten) durchgeführt werden. Insbesondere können hierbei komplexe Impedanzen als ein Maß für die Eigenschaften der Flüssigkeiten bestimmt und entsprechend ausgewertet werden.

Des Weiteren offenbart die Druckschrift US 2005/184734 A1 eine Erfassungseinrichtung zur Erfassung von Eigenschaften von fluiden Medien, wobei mittels einer Impedanzspektroskopie Kennlinien aufgezeichnet werden, entsprechend denen auf die Eigenschaften des Mediums geschlossen werden kann. Hierzu werden Elektroden im fluiden Medium innerhalb eines Behälters angeordnet und mit elektrischen Spannungen angesteuert, wobei hinsichtlich der Frequenz der angelegten Spannung ein Durchlauf innerhalb eines vorbestimmten Frequenzbereichs möglich ist. Danach kann eine Strommessung zur Bereitstellung eines Erfassungsergebnisses durchgeführt werden, wobei aus den angelegten und erfassten Werten der Wirk- und der Blindwiderstand für eine Vielzahl von Frequenzintervallen innerhalb eines Frequenzbereichs ermittelt wird. Es wird hierzu eine spezielle Frequenz in diesem Bereich bestimmt, die in Verbindung mit einem Minimum des Blindwiderstands steht (Nyquist-Minimum-Frequenz). Weitere Messungen erfolgen für unterschiedliche Temperaturen oder Temperaturbereiche des Mediums. Aus der erfassten Gesamtinformation in Verbindung mit der Temperatur des Mediums kann auf die Eigenschaften des Mediums und die spezielle Temperaturabhängigkeit der Eigenschaften geschlossen werden.

Des Weiteren offenbaren die Druckschriften DE202011101482 U1, DE10042846 A1 und DE19534431 Erfassungseinrichtungen zur Bestimmung der Eigenschaften von fluiden Medien mittels Impedanzspektroskopie.

Die Literaturstelle: Kurzweil / Fischle: 2004, "A new monitoring method for electrochemical aggregates by impedance spectroscopy"; Journal of Power Sources S. 331 - 340 betrifft Grundlagen der Impedanzspektroskopie und zeigt ein mathematisches Modell, das zu einer Auswertung herangezogen werden kann.

Mit der zunehmenden Betrachtung der Wasch- und Reinigungsvorgänge sowie der verwendeten Waschmittel und der eingesetzten Energie unter Umweltschutzgesichtspunkten ist es erforderlich, sowohl eine Wassermenge als auch eine Waschmittelmenge und die während des Waschvorgangs verwendeten Temperaturen der Waschlauge in Abhängigkeit von beispielsweise dem Verschmutzungsgrad eines Waschguts oder den in Frischwasser gelösten Stoffen (Wasserhärte) zu dosieren. Eine gezielte und hinsichtlich der Menge an Waschmitteln optimale Dosierung führt einerseits zu einer Einsparung an Waschmittel und Wasser, sowie andererseits auch zu einer erstrebten geringeren Belastung des Abwassers. Ferner werden bei einer Optimierung des Waschvorgangs Waschzeiten und -temperaturen entsprechend eingestellt, so dass auch der Energieverbrauch vermindert ist.

Im Allgemeinen enthalten Waschmittel zur Bildung einer Waschlauge zur Reinigung beispielsweise von Textilien Tenside als oberflächenaktive Substanzen, wobei die Oberflächenspannung des Wassers in der gebildeten wässrigen Lösung (Waschlauge) herabgesetzt wird, da sich die Tenside bevorzugt an der Oberfläche des Wassers bzw. der Waschlauge und damit an einer Grenzfläche anlagern. Insbesondere lagern sich Tenside ab einer bestimmten Konzentration in der Waschlauge in Form von sogenannten Mizellen an, da diese energetisch günstiger sind. Es entspricht diese Konzentration der kritischen Mizellbildungskonzentration (cmc., critical micell concentration).

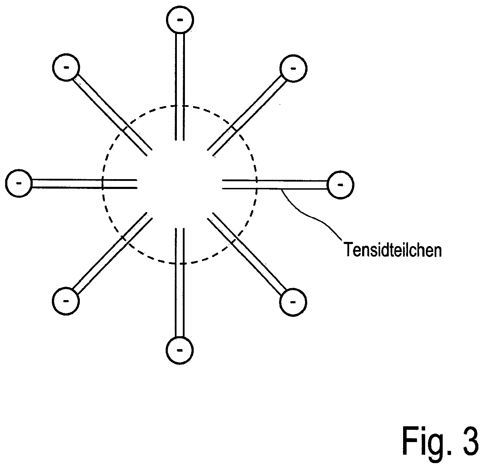

In Fig. 3 ist in vereinfachter und schematischer Darstellung eine derartige Mizelle veranschaulicht, die sich in Abhängigkeit von der Art des Tensids in einer Waschlauge (in der Betrachtung als Tensidlösung) bei geringer Konzentration an der Wasseroberfläche und bei zunehmender Konzentration auch innerhalb der Waschlauge anlagern, wenn die Grenzfläche in Form der Wasseroberfläche nahezu vollständig mit den Mizellen ausgefüllt ist. Die Mizellen als Verbände (Aggregation) in unterschiedlicher Form von mehreren 100 bis 1000 Tensidanionen zeigen somit auch im Inneren der Lösung eine entsprechende Wechselwirkung mit dem Wasser der Waschlauge.

Mittels entsprechender Verfahren kann die kritische Mizellbildungskonzentration durch Messungen der Oberflächenspannung in Abhängigkeit von der Tensidkonzentration durchgeführt werden. Im Einzelnen wird eine Federwaage mit einer Platte verbunden, die in die zu untersuchende Flüssigkeit getaucht wird. An der Grenzfläche zwischen der Flüssigkeit und der umgebenden Luft wird eine Oberflächenspannung ausgebildet (Meniskus). Durch eine entsprechende Kraftmessung kann die Oberflächenspannung eines zu erfassenden Mediums, beispielsweise von Wasser oder einer Waschlauge, ermittelt werden (Wilhelmy-Waage).

Es kann des Weiteren die Oberflächenspannung auch mit einem Blasentensiometer bestimmt werden, wobei jedoch die Erfassung der Oberflächenspannung mit den beiden vorstehend angegebenen Verfahren speziell im Hinblick auf zu verwendende Geräte sehr aufwendig ist und im Wesentlichen nur in einem Labor unter vorbestimmten Bedingungen eingesetzt werden kann. Mit diesen Verfahren können grundlegende Messungen durchgeführt werden, wobei jedoch eine rasche und einfache und insbesondere häufige oder kontinuierliche Erfassung der Parameter eines fluiden Mediums in industriellen Anlagen oder in Haushalten, wie beispielsweise in Verbindung mit einer Waschlauge während eines Prozesses bei der jeweiligen Anwendung, nicht einfach durchgeführt werden kann.

Es besteht ferner die Möglichkeit, die elektrische Leitfähigkeit eines entsprechenden fluiden Mediums, wie beispielsweise einer Waschlauge, zur Bestimmung eines funktionellen Zusammenhangs von Messsignalen (Messgrößen) mit der Tensidkonzentration durchzuführen, wobei dies im Wesentlichen eine indirekte Bestimmung dieser Information durch die elektrische Leitfähigkeit darstellt. Insbesondere wären zwei Messreihen erforderlich. Eine erste Messreihe erfasst eine Information in Verbindung mit einem Übergang von einer niedrigen zu einer hohen Konzentration der Tenside in der Waschlauge, und eine zweite Messreihe erfasst die Information in Verbindung mit einem Übergang von einer hohen zu einer niedrigen Konzentration. Insbesondere ist die zweite Messreihe mit einer Verringerung der Konzentration ist in industriellen Wascheinrichtungen und auch in privaten Haushalten nicht auf einfache Weise möglich.

Die vorstehend angegebenen Verfahren zur Bestimmung von Eigenschaften speziell einer Waschlauge über die Messung der Oberflächenspannung und mit dem Blasentensiometer oder mittels einer indirekten Bestimmung durch die elektrische Leitfähigkeit, erfordern somit einen hohen Aufwand in Bezug auf technische Einrichtungen und die zugehörige Auswertung, wobei dies auch zu erhöhten Kosten führt. Die Vorgehensweise ist im Allgemeinen schwerfällig und somit nicht geeignet, um eine schnelle Erfassung insbesondere innerhalb eines laufenden Prozesses zu erhalten. Mit dem erhöhten Aufwand, der für die vorstehend beschriebenen bekannten Verfahren erforderlich ist, kann eine Anwendung während laufender Prozesse in einer industriellen Anlage oder beispielsweise bei einem Waschvorgang in privaten Haushalten nicht in Frage kommen.

Der vorliegenden Erfindung liegt daher die Aufgabe zugrunde, ein Verfahren und eine Vorrichtung zur Bestimmung einer Mizellbildungskonzentration in einem wässrigen Medium derart auszugestalten, dass auf einfache und kostengünstige Weise innerhalb eines laufenden Prozesses eine beliebige und schnelle Erfassung der Mizellbildungskonzentration gewährleistet ist.

Erfindungsgemäß wird diese Aufgabe gelöst durch ein Verfahren und eine Vorrichtung zur Bestimmung einer Mizellbildungskonzentration gemäß den Merkmalen der beigefügten Patentansprüche.

Das erfindungsgemäße Verfahren zur Bestimmung der Konzentration von Mizellen (Mizellbildungskonzentration) kann beispielsweise in einer Wascheinrichtung für eine Anwendung in privaten Hauhalten oder in der Industrie durchgeführt werden.

Das Verfahren zur Bestimmung einer Mizellbildungskonzentration gemäß der vorliegenden Erfindung und einem ersten Aspekt wird in einer Wascheinrichtung durchgeführt, und die Wascheinrichtung weist eine zur Durchführung eines Waschvorgangs erforderliche Wassermenge auf. Das Verfahren umfasst die Schritte: Zuführung einer Grundmenge eines Waschmittels zur Wassermenge zur Bildung einer Waschlauge (Schritt 1), Erfassen einer Impedanz der Waschlauge bei einer vorbestimmten Frequenz mit einem Realteil und einem Imaginärteil (Schritt 2), Bestimmen eines Produkts aus dem Realteil und dem Imaginärteil der Impedanz (Schritt 3), Hinzufügen einer weiteren Teilmenge des Waschmittels zur Waschlauge (Schritt 4), Erfassen einer weiteren Impedanz bei der vorbestimmten Frequenz mit einem Realteil und einem Imaginärteil der vorliegenden Waschlauge (Schritt 5), Bestimmen eines weiteren Produkts aus dem Realteil und dem Imaginärteil der weiteren Impedanz (Schritt 6), Bestimmen einer Steigung zwischen den zuvor ermittelten Produkten in Abhängigkeit von einer Waschlaugenkonzentration (Schritt 7), Bestimmen, ob der Betrag der Steigung kleiner als ein oder gleich einem Toleranzwert ist und Wiederholen der Schritte 4 bis 8, falls der Betrag der Steigung größer als der Toleranzwert ist (Schritt 8), und Beenden des Verfahrens, wenn der Betrag der Steigung kleiner als der oder gleich dem Toleranzwert ist (Schritt 9).

Das Verfahren zur Bestimmung einer Mizellbildungskonzentration gemäß der vorliegenden Erfindung und einem zweiten Aspekt wird in einer Wascheinrichtung durchgeführt, und die Wascheinrichtung weist eine zur Durchführung eines Waschvorgangs erforderliche Wassermenge auf. Das Verfahren umfasst die Schritte: Zuführung einer Grundmenge eines Waschmittels zur Wassermenge zur Bildung einer Waschlauge (Schritt 1), Erfassen einer Impedanzkennlinie der Waschlauge und Bestimmen einer Frequenz eines lokalen Tiefpunkts der Impedanzkennlinie, Bestimmen einer Impedanz bei der Frequenz mit einem Realteil und einem Imaginärteil (Schritt 3), Bestimmen eines Produkts aus dem Realteil und dem Imaginärteil der Impedanz (Schritt 4), Hinzufügen einer weiteren Teilmenge des Waschmittels zur Waschlauge (Schritt 5), Bestimmen einer weiteren Impedanzkennlinie der vorliegenden Waschlauge und Bestimmen einer Frequenz eines lokalen Tiefpunkts der Impedanzkennlinie (Schritt 6), Bestimmen einer Impedanz bei der Frequenz mit einem Realteil und einem Imaginärteil (Schritt 7), Bestimmen eines Produkts aus dem Realteil und dem Imaginärteil der Impedanz (Schritt 8), Bestimmen einer Steigung zwischen den zuvor ermittelten Produkten in Abhängigkeit von der Waschlaugenkonzentration (Schritt 9), Bestimmen, ob der Betrag der Steigung kleiner als oder gleich einem Toleranzwert ist, und Wiederholen der Schritte 4 bis 9, falls der Betrag der Steigung größer als der Toleranzwert ist, (Schritt 10), und Beenden des Verfahrens, wenn der Betrag der Steigung kleiner als der oder gleich dem Toleranzwert ist (Schritt 11).

Die erfindungsgemäße Vorrichtung gemäß dem ersten Aspekt dient zur Bestimmung einer Mizellbildungskonzentration in einer Wascheinrichtung, wobei die Wascheinrichtung eine zur Durchführung eines Waschvorgangs erforderliche Wassermenge aufweist. Die Erfindung betrifft die Vorrichtung mit: einer Einrichtung zum Zuführung einer Grundmenge eines Waschmittels zur Wassermenge zur Bildung einer Waschlauge, einer Einrichtung zum Erfassen einer Impedanz der Waschlauge bei einer vorbestimmten Frequenz mit einem Realteil und einem Imaginärteil, einer Einrichtung zum Bestimmen eines Produkts aus dem Realteil und dem Imaginärteil der Impedanz, einer Einrichtung zum Hinzufügen einer weiteren Teilmenge des Waschmittels zur Waschlauge, einer Einrichtung zum Erfassen einer weiteren Impedanz bei der vorbestimmten Frequenz mit einem Realteil und einem Imaginärteil der vorliegenden Waschlauge, einer Einrichtung zum Bestimmen eines weiteren Produkts aus dem Realteil und dem Imaginärteil der weiteren Impedanz, einer Einrichtung zum Bestimmen einer Steigung zwischen den zuvor ermittelten Produkten in Abhängigkeit von einer Waschlaugenkonzentration, einer Einrichtung zum Bestimmen, ob der Betrag der Steigung kleiner als ein oder gleich einem Toleranzwert ist und Wiederholen der Schritte 4 bis 8, falls der Betrag der Steigung größer als der Toleranzwert ist, und einer Einrichtung zum Beenden des Verfahrens, wenn der Betrag der Steigung kleiner als der oder gleich dem Toleranzwert ist.

Die erfindungsgemäße Vorrichtung gemäß dem zweiten Aspekt dient zur Bestimmung einer Mizellbildungskonzentration in einer Wascheinrichtung, wobei die Wascheinrichtung eine zur Durchführung eines Waschvorgangs erforderliche Wassermenge aufweist. Die Erfindung betrifft die Vorrichtung mit:: einer Einrichtung zum Zuführung einer Grundmenge eines Waschmittels zur Wassermenge zur Bildung einer Waschlauge, einer Einrichtung zum Erfassen einer Impedanzkennlinie der Waschlauge und Bestimmen einer Frequenz eines lokalen Tiefpunkts der Impedanzkennlinie, einer Einrichtung zum Bestimmen einer Impedanz bei der Frequenz mit einem Realteil und einem Imaginärteil, einer Einrichtung zum Bestimmen eines Produkts aus dem Realteil und dem Imaginärteil der Impedanz, einer Einrichtung zum Hinzufügen einer weiteren Teilmenge des Waschmittels zur Waschlauge, einer Einrichtung zum Bestimmen einer weiteren Impedanzkennlinie der vorliegenden Waschlauge und Bestimmen einer Frequenz eines lokalen Tiefpunkts der Impedanzkennlinie, einer Einrichtung zum Bestimmen einer Impedanz bei der Frequenz mit einem Realteil und einem Imaginärteil, einer Einrichtung zum Bestimmen eines Produkts aus dem Realteil und dem Imaginärteil der Impedanz, einer Einrichtung zum Bestimmen einer Steigung zwischen den zuvor ermittelten Produkten in Abhängigkeit von der Waschlaugenkonzentration, einer Einrichtung zum Bestimmen, ob der Betrag der Steigung kleiner als oder gleich einem Toleranzwert ist, und Wiederholen der Schritte 4 bis 9, falls der Betrag der Steigung größer als der Toleranzwert ist, und einer Einrichtung zum Beenden des Verfahrens, wenn der Betrag der Steigung kleiner als der oder gleich dem Toleranzwert ist.

Mit dem vorstehend beschriebenen Verfahren und der zur Durchführung des Verfahrens vorgesehenen Vorrichtung besteht eine einfache und kostengünstige Möglichkeit, während eines Waschvorgangs und speziell während der Dosierung des Waschmittels bei dem Betrieb der Wascheinrichtung eine Bestimmung der Mizellbildungskonzentration (Konzentration der im Verlauf des Waschvorgangs sich bildenden Mizellen) durchzuführen, so dass die im laufenden Dosiervorgang gewonnenen Daten unmittelbar für die Steuerung und Regelung des Dosiervorgangs und damit auch des gesamten(nachfolgenden) Waschvorgangs verwendet werden können.

Hierbei kann die Vorrichtung auf einfache und kostengünstige Weise hergestellt und in eine handelsübliche Wascheinrichtung für private Haushalte sowie auch unter den gleichen günstigen Bedingungen in eine Maschine oder Anlage für industrielle Anwendungen eingebaut und betrieben werden, wobei während des laufenden Prozesses (kontinuierlich oder intermittierend) aktuelle Daten und auch allgemeine Informationen zur Durchführung der Steuerung oder Regelung gewonnen werden. Die auf der Basis der gewonnenen Daten durchgeführte Steuerung oder Regelung des Prozesses führt zu einer optimalen Reinigung und gleichzeitig zu einem optimalen Einsatz von Waschmittel und Energie, sowie einer angemessenen Prozessdauer mit einer geringsten Umweltbelastung.

Mit der kostengünstig und damit auch in großen Stückzahlen herzustellenden Vorrichtung zur Erfassung der Mizellbildungskonzentration in einem wässrigen Medium, beispielsweise in der vorstehend beschriebenen Waschlauge, besteht die Möglichkeit, auch Wascheinrichtungen (Waschgeräte, Waschmaschinen sowie Geschirrspüler) für private Haushaltungen oder auch industrielle Anwendungen mit einer derartigen Vorrichtung auszustatten, ohne dass die Kosten erheblich ansteigen. Auch bei einer Vielzahl erforderlicher Waschvorgänge können kostengünstig Steuerungs- und Regelvorgänge teilweise automatisiert oder vollautomatisch durchgeführt werden, wobei Ressourcen wie Frischwasser und Energie sowie Umweltaspekte durch einen geringen Waschmittelverbrauch bei einer gleichzeitig effektiven Reinigung berücksichtigt werden können.

Die im Zusammenhang mit der vorliegenden Erfindung beschriebene Vorrichtung (mit dem zugehörigen Verfahren) ermöglicht eine kostengünstige Herstellung der jeweils erforderlichen Komponenten, so dass in weiten Bereichen in privaten Haushalten eingesetzte Wascheinrichtungen ohne erhebliche Kostensteigerungen und geringen Änderungen mit einer derartigen Vorrichtung ausgestattet werden können. Zur Bedienung einer mit der Vorrichtung ausgestatteten Wascheinrichtung ist ein speziell geschultes Personal nicht erforderlich, vielmehr stellt der Betrieb einer derartigen Wascheinrichtung keine höheren Anforderungen an das Bedienpersonal oder den Benutzer als bei bekannten Wascheinrichtungen, da mit der erfindungsgemäßen Vorrichtung und dem zugehörigen Verfahren ein automatischer Ablauf gewährleistet ist, der eine erhöhte Aufmerksamkeit des Benutzers nicht erfordert.

Weitere Ausgestaltungen der vorliegenden Erfindung sind in den Unteransprüchen angegeben.

In dem Verfahren kann der Toleranzwert in Abhängigkeit von der erforderlichen Genauigkeit der Bestimmung der Mizellbildungskonzentration bestimmt werden, wobei die Genauigkeit mit kleiner werdendem Toleranzwert ansteigt.

In dem Verfahren kann das Hinzufügen einer weiteren Teilmenge des Waschmittels das Hinzufügen einer weiteren Grundmenge oder einer davon abweichenden vorbestimmten Menge des Waschmittels in die bestehende Waschlauge umfassen.

In dem Verfahren kann die Steigung in einer Produktkennlinie über der Konzentration der Waschlauge dargestellt werden, und es kann die Steigung zwischen Werten des Produkts gebildet werden, die aus zeitlich aufeinanderfolgenden Erfassungen hervorgehen.

In dem Verfahren kann die Steigung zwischen den Werten des jeweiligen Produkts, die aus zeitlich aufeinanderfolgenden Erfassungen hervorgehen, mittels eines numerischen Verfahrens ermittelt wird.

In dem Verfahren kann die Bestimmung der Impedanzkennlinien über einen gesamten Frequenzbereich zur Erfassung einer vollständigen Impedanzkennlinie oder über einen Teil des Frequenzbereichs durchgeführt werden, in dem der lokale Tiefpunkt sicher erwartet wird.

Die vorliegende Erfindung wird nachstehend anhand von Ausführungsbeispielen unter Bezugnahme auf die Zeichnungen näher beschrieben. Es zeigen:
Fig. 1 ein Blockschaltbild des grundsätzlichen Aufbaus der Vorrichtung zur Durchführung von Erfassungen einer Mizellbildungskonzentration in Verbindung mit dem erfindungsgemäßen Verfahren,
Fig. 2 eine vereinfachte schematische Darstellung der Vorrichtung gemäß Fig. 1, die beispielsweise in einem Gerät, wie einer Wascheinrichtung, angeordnet ist,
Fig. 3 eine vereinfachte und schematische Darstellung des Aufbaus einer Mizelle,
Fig. 4 eine graphische Darstellung einer Kennlinie der Oberflächenspannung in Abhängigkeit von der Waschlaugenkonzentration,
Fig. 5 ein Ablaufdiagramm zur Veranschaulichung des Verfahrens zur Bestimmung der Mizellbildungskonzentration gemäß einem ersten Ausführungsbeispiel der vorliegenden Erfindung,
Fig. 6 eine graphische Darstellung einer Kennlinie zur Veranschaulichung der Beziehung zwischen einem Produkt aus dem Realteil und Imaginärteil der Impedanz bei einer vorbestimmten Frequenz in Abhängigkeit von der Waschmittelkonzentration,
Fig. 7 ein Ablaufdiagramm zur Veranschaulichung des Verfahrens zur Bestimmung der Mizellbildungskonzentration gemäß einem zweiten Ausführungsbeispiel der vorliegenden Erfindung,
Fig. 8 eine graphische Darstellung einer Kennlinie zur Veranschaulichung des Produkts aus dem Realteil und dem Imaginärteil der Impedanz bei einer Frequenz entsprechend dem lokalen Tiefpunkt in Abhängigkeit von der Waschmittelkonzentration,
Fig. 9 eine graphische Darstellung eines Impedanzspektrums einer Waschlauge mit einer bestimmten Waschmittelkonzentration und zur Veranschaulichung der Impedanz in einem lokalen Tiefpunkt, und
Fig. 10 eine graphische Darstellung einer Kennlinie der Ableitung des Produkts aus dem Realteil und dem Imaginärteil der Impedanz der nach der Waschmittelkonzentration, basierend auf den Kennlinien gemäß den Fig. 6 und 8.

### Grundlegende Anordnung der Vorrichtung

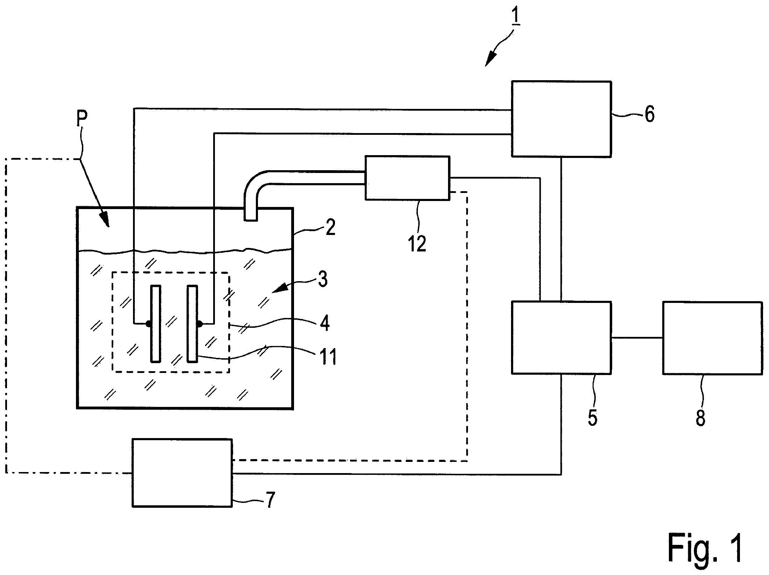

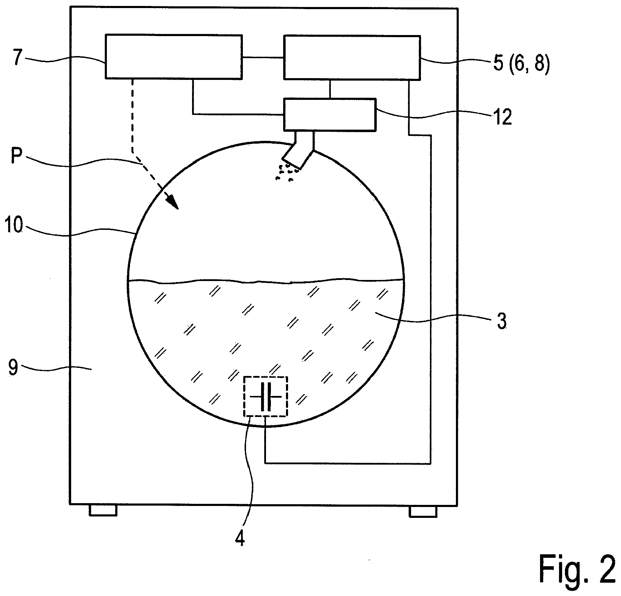

Nachstehend werden die grundlegende Anordnung der Vorrichtung gemäß der vorliegenden Erfindung sowie die entsprechende Wirkungsweise in Verbindung mit dem Blockschaltbild gemäß Fig. 1 und der schematischen Darstellung einer Anwendung in einem Gerät gemäß Fig. 2 beschrieben.

Fig. 1 zeigt in Form eines Blockschaltbilds die Vorrichtung zur Bestimmung einer Mizellbildungskonzentration (nachstehend vereinfacht als "die Vorrichtung 1" bezeichnet) in einer Anwendung zur Erfassung der Eigenschaften des in einem Behälter 2 angeordneten fluiden Mediums 3. Der Begriff des Behälters ist hier in sehr allgemeiner Form aufzufassen, wobei es sich beispielsweise um einen Tank in einer Maschine, einen Laugenbehälter einer Wascheinrichtung (Waschmaschine) oder einen beliebigen Behälter mit einem zur Reinigung dienenden Medium (Flüssigkeit, wässrige Lösung) handeln kann. Die vorliegende Erfindung ist nicht auf eine dieser Behälterarten beschränkt und kann vielmehr bei jeder Behälterart angewendet werden, bei der fluide Medien während eines Prozesses einer Veränderung unterliegen und diese Veränderung im Sinne vorbestimmter Kriterien erfasst werden soll.

Die in Verbindung mit den Figuren 1 und 2 beschriebene Vorrichtung 1 dient zur Durchführung des nachstehend noch beschriebenen Verfahrens gemäß einem ersten und zweiten Ausführungsbeispiel. Die Vorrichtung 1 ist hinsichtlich der Grundkomponenten im Wesentlichen dieselbe für beide Ausführungsbeispiele des Verfahrens zur Bestimmung einer Mizellbildungskonzentration des fluiden Mediums. Abweichungen in der Ausführung der Vorrichtung zur Durchführung des jeweiligen Ausführungsbeispiels des Verfahrens sind im Zusammenhang mit dem betreffenden Ausführungsbeispiel des Verfahrens angegeben.

Die Vorrichtung gemäß Fig. 1 umfasst eine Sensoreinrichtung 4, die zur Erfassung der Eigenschaften des fluiden Mediums dient. Das fluide Medium 3 kann beispielsweise in Form einer Waschlauge vorliegen oder auch in Form von Frischwasser, dem in vorbestimmter Weise (im Hinblick auf eine Zeitbedingung) eine gewisse Menge eines Reinigungsmittels (Waschmittel) zugeführt wird. Es können mit der Vorrichtung weitere Eigenschaften oder Parameter des fluiden Mediums 3, wie beispielsweise eine Wasserhärte, Schadstoffe oder unerwünschte Fremdstoffe hinsichtlich ihres Anteils an dem fluiden Medium 3 bestimmt werden.

Zur Durchführung entsprechender Messungen ist die Sensoreinrichtung 4 der Vorrichtung 1 in dem Behälter 2 angeordnet und wird zumindest teilweise von dem fluiden Medium 3 umströmt, so dass der Einfluss der Eigenschaften des Mediums 3 auf die Messung und somit eine genaue Erfassung gewährleistet sind. Ist beispielsweise die Sensoreinrichtung 4 in Form eines Kondensators (in vereinfachter Form als ein Plattenkondensator) aufgebaut, befindet sich das Medium 3 als ein Dielektrikum zwischen den in Fig. 1 schematisch dargestellten Kondensatorplatten 11 und übt einen Einfluss auf die sich ergebende Kapazität des Kondensators aus. Insbesondere ist gemäß den elektrotechnischen Grundlagen die Kapazität des Kondensators von den dielektrischen Eigenschaften eines zwischen Kondensatorplatten befindlichen Materials direkt abhängig, so dass sich die Kapazität und damit auch die elektrischen Werte des Kondensators mit der Änderung des Dielektrikums ebenfalls ändern. Es besteht somit die Möglichkeit, auf der Basis der direkten Abhängigkeit der Kapazität des Kondensators von den Eigenschaften eines Dielektrikums auf die jeweiligen Änderungen dieses Dielektrikums aufgrund einer entsprechenden Messung zu schließen.

Die Vorrichtung 1 gemäß Fig. 1 umfasst ferner eine Steuerungseinrichtung 5, die einerseits zur Steuerung und/oder Regelung der gesamten Abläufe der Erfassung dient, und andererseits eine Ansteuerung der Sensoreinrichtung 4 mit vorbestimmten elektrischen Werten (Spannungen, Ströme, Frequenzen) veranlasst, sowie eine Auswertung der von der Sensoreinrichtung 4 abgegebenen Signale (Erfassungssignale) durchführt. Die Steuerungseinrichtung 5 kann eine Verbindung zu weiteren (in den Figuren zur Vereinfachung nicht dargestellten) Datenverarbeitungseinrichtungen und/oder Netzwerken aufweisen. Die Steuerungseinrichtung weist entsprechende Datenverarbeitungs- und Steuerungsprogramme auf, mit denen das nachstehend beschriebene Verfahren gemäß den Ausführungsbeispielen durchgeführt werden kann.

Des Weiteren ist die Steuerungseinrichtung 5 mit einer Ansteuerungseinrichtung 6 verbunden, die ihrerseits mit der Sensoreinrichtung 4 in Verbindung steht und entsprechend innerhalb der Steuerungseinrichtung 5 erzeugter Anweisungen und Befehle die Sensoreinrichtung 4 mit jeweiligen elektrischen Signalen ansteuert. Beispielsweise werden an die Sensoreinrichtung 4 zur Durchführung entsprechender Messungen Ströme und Spannungen in Verbindung mit vorbestimmten Größen (Amplitude) und mit vorbestimmten Frequenzen oder Frequenzbereichen angelegt. Es kann des Weiteren auch die Temperatur des Mediums 3 mittels einer (nicht gezeigten) Einrichtung erfasst werden.

In Fig. 1 sind die Steuerungseinrichtung 5 und die Ansteuerungseinrichtung 6 als getrennte Einheiten vorgesehen. Alternativ kann die Ansteuerungseinrichtung 6 auch innerhalb der Steuerungseinrichtung 5 angeordnet sein, wobei in der dann gebildeten Steuerungseinrichtung 5 die Funktionen der früheren Steuerungseinrichtung 5 und der Ansteuerungseinrichtung 6 zusammengefasst sind.

Die Steuerungseinrichtung 5 ist ferner mit einer Steuereinheit 7 verbunden, die direkt im Zusammenhang mit dem Behälter 2 steht. Wird beispielsweise angenommen, dass der Behälter 2 der Laugenbehälter einer Wascheinrichtung 9 (Waschmaschine) ist, dann stellt die Steuereinheit 7 die Einrichtung zur elektrischen und elektronischen Steuerung der Wascheinrichtung 9 dar. In der Wascheinrichtung 9 werden in einer entsprechend programmierten Weise Wassermenge und Waschmittelzugabe (Waschmittelzuführung) sowie Waschtemperaturen und Zeitverlauf eines Waschvorgangs sowie auch Schleuderzeiten und Schleuderdrehzahlen gesteuert. Die Steuerungseinrichtung 5 kann in Abhängigkeit von den Messergebnissen in Verbindung mit dem erfindungsgemäßen Verfahren die Steuereinheit 7 beeinflussen, so dass abweichend von einem vorbestimmten Programm oder in Ergänzung desselben eine größere oder kleinere Wasser- oder Waschmittelmenge eingesetzt oder beispielsweise auch eine Veränderung der Waschtemperatur vorgenommen werden kann. Ein in der Steuereinheit 7 der Wascheinrichtung 9 enthaltenes Steuerprogramm zur Durchführung sämtlicher Funktionen in Verbindung mit Waschvorgängen steht mit der Steuerungseinrichtung 5 der Vorrichtung 1 in ständigem oder zyklischen (intermittierenden) Datenaustausch zur gegenseitigen Beeinflussung.

Somit kann auf der Basis der gemäß der vorliegenden Erfindung gewonnenen Information über die Eigenschaften des fluiden Mediums 3 (beispielsweise einer Waschlauge) die Steuereinheit 7 der Wascheinrichtung 9 zur Durchführung von Steuerungs- und/oder Regelungsvorgängen während eines laufenden Prozesses (eines aktuell durchgeführten Waschvorgangs einschließlich eines am Anfang des Waschvorgangs liegenden Dosiervorgangs) entsprechend beeinflusst werden. Mittels eines Pfeils P ist gemäß Fig. 1 die Einflussnahme der Steuereinheit 7 auf den Waschvorgang (Dosiervorgang) schematisch und in allgemeiner Form angedeutet.

Die Steuerungseinrichtung 5 ist ferner verbunden mit einer Speichereinrichtung 8, in der zur Durchführung der Erfassung der Eigenschaften des Mediums entsprechende Daten und Programme zur Durchführung des erfindungsgemäßen Verfahrens gespeichert sind. Die Steuerungseinrichtung 5 kann auf diese Daten und Programme zugreifen, und es können in der Speichereinrichtung 8 aktuell gewonnene Daten sowie ursprünglich erzeugte Kennfelder und weitere Betriebswerte zeitweilig oder dauernd gespeichert werden. Alternativ kann die Speichereinrichtung 8 auch in der Steuerungseinrichtung 5 integriert bzw. enthalten sein.

In der Darstellung von Fig. 1 ist die Vorrichtung 1 zur Erfassung der Mizellbildungskonzentration einschließlich der Sensoreinrichtung 4, der Steuerungseinrichtung 5, der Ansteuerungseinrichtung 6 und er Speichereinrichtung 8 in allgemeiner Form gezeigt. Fig. 2 zeigt demgegenüber die Anordnung der Vorrichtung 1 in der Wascheinrichtung 9. In einem Laugenbehälter 10 der Wascheinrichtung 9 befindet sich das fluide Medium 3, und vorzugsweise in einem tieferen Bereich des Waschlaugenbehälters 10 ist die Sensoreinrichtung 4 angeordnet. Sie steht mit der Steuerungseinrichtung 5, der Ansteuerungseinrichtung 6 sowie der Speichereinrichtung 8 in Verbindung. Die Steuerungseinrichtung 5 ist mit der Steuereinheit 7 der Wascheinrichtung 9 verbunden.

Befindet sich in dem Laugenbehälter 10, der dem Behälter 2 gemäß Fig. 1 entspricht, das zu erfassende fluide Medium 3, beispielsweise in Form einer Waschlauge, erfasst die Sensoreinrichtung 4 in Verbindung mit der Steuerungseinrichtung 5 verschiedene Eigenschaften und Parameter des Mediums 3, und es erfasst die vorstehend beschriebene Vorrichtung 1 vorzugsweise während des gesamten Waschvorgangs und somit speziell während der Zugabe des erforderlichen Waschmittels (Dosiervorgang) die Mizellbildungskonzentration in dem Medium 3.

Wie es aus Fig. 2 erkennbar ist, kann die Vorrichtung ohne Weiteres in eine bestehende und handelsübliche Wascheinrichtung 9 (Waschgerät, Waschmaschine) eingebaut werden, wobei lediglich die Sensoreinrichtung 4 und die Steuerungseinrichtung 5 (einschließlich der Ansteuerungseinrichtung 6 und der Speichereinrichtung 8) berücksichtigt werden müssen. Neben der Anwendung bei Waschgeräten wie der Wascheinrichtung 9 besteht auch die Möglichkeit, die erfindungsgemäße Anordnung sowie das zugehörige Verfahren in jedem Gerät bei jeder Art fluider Medien 3 anzuwenden. Zur Vereinfachung der Darstellung werden der Aufbau und die Wirkungsweise der vorliegenden Erfindung anhand einer Wascheinrichtung mit einer Waschlauge als Medium 3 beschrieben.

Die Wascheinrichtung 9 gemäß Fig. 2 weist zur Durchführung des Waschvorgangs und zu Beginn desselben eine erforderliche Menge an Frischwasser auf. Bei der Durchführung eines Waschvorgangs wird im Allgemeinen der angemessenen Frischwassermenge während oder nach dem Einlaufen in die Wascheinrichtung 9 mittels eines gesteuerten Dosiervorgangs Waschmittel in vorbestimmter Menge zugeführt. Es entsteht damit die eingangs genannte und das Medium 3 darstellende Waschlauge als Lösung von Tensiden (und anderen Stoffen) mit in Abhängigkeit vom Dosiervorgang unterschiedlicher Konzentration c. Die Konzentration c kann hierbei als die Menge einer Substanz in einer Lösung angegeben werden, beispielsweis in Gramm pro Liter (g / l).

Während des Waschvorgangs und schon beim Dosiervorgang als dem anfänglichen Teil des Waschvorgangs bilden sich durch Aggregation der Tenside Mizellen, deren Konzentration mittels der erfindungsgemäßen Vorrichtung und dem zugehörigen Verfahren kontinuierlich oder zyklisch in kurzen (vorbestimmten) Zeitabständen mittels der Vorrichtung 1 bestimmt wird. Der Waschvorgang und insbesondere der Dosiervorgang kann aufgrund des Erfassungsergebnisses der Vorrichtung 1 in der Wascheinrichtung 9 gesteuert oder geregelt werden. Hierbei steht die Erfassung der Mizellbildungskonzentration in Verbindung mit der entsprechend dosierten Zugabe von Waschmittel.

In Bezug auf die eingangs beschriebenen Wirkungen der in Waschmitteln enthaltenen Tenside als oberflächenaktive Substanzen zeigt Fig. 3 in vereinfachter und schematischer Darstellung den Aufbau einer Mizelle. Die zur Vereinfachung zweidimensional dargestellte Anordnung der Mizelle gemäß Fig. 3 ist tatsächlich dreidimensional und wird auch als Kugel-Mizelle bezeichnet. Ferner können sich die Tenside des Waschmittels um Schmutzpartikel anlagern, die vom Waschgut abgelöst wurden. In Abhängigkeit von der Art des Waschmittels und den jeweiligen Waschtensiden lagern sich diese nebeneinander und um die Schmutzpartikel an (Aggregation).

Mizellen bilden sich ab einer bestimmten Konzentration des Waschmittels im Wasser (Waschlauge) und sind ebenfalls in Abhängigkeit von der Art des Tensids elektrisch gemäß der Darstellung in Fig. 3 polarisiert (Neigung der Tenside zur Phasentrennung). Entsprechend der entstandenen Konzentration lagern sich derartige Mizellen im Wesentlichen an der Wasseroberfläche (Grenzfläche) an.

Die Vorrichtung 1 zur Erfassung der Mizellbildungskonzentration und insbesondere einer kritischen Mizellbildungskonzentration wurde vorstehend in Verbindung mit den Figuren 1 und 2 beschrieben. Die Sensoreinrichtung 4, die mit dem zu erfassenden Medium 3 und im vorliegenden Beispiel mit der Waschlauge in Verbindung steht bzw. von dieser umströmt wird, bildet eine elektrochemische Zelle, die beispielsweise mittels Kondensatorplatten 11 gemäß Fig. 1 aufgebaut sein kann. Hierbei hat die elektrochemische Zelle in Form der Sensoreinrichtung 4 einen flüssigen Elektrolyten (das Medium 3), der zwischen den Kondensatorplatten 11 angeordnet ist und gleichzeitig auch eine gewisse elektrische Leitfähigkeit aufweist, die abhängig ist von der Beschaffenheit des Elektrolyten, der hier in Form der Waschlauge bzw. des Mediums 3 vorliegt. Die elektrische Leitfähigkeit wird beeinflusst durch beispielsweise die Wasserhärte und die in das Wasser eingebrachte Menge an Waschmitteln (Waschmittel- oder Tensidkonzentration) sowie auch durch Verschmutzung.

Bei der elektrochemischen Zelle mit dem flüssigen Elektrolyten liegen in elektrischer Hinsicht bei einer Ansteuerung mit Spannungs- und Stromsignalen mit vorbestimmten Frequenzen (Wechselsignale) ein kapazitiver und ein induktiver Blindwiderstandsanteil vor. Bei niedrigen Konzentrationen eines Waschmittels im Wasser überwiegt der kapazitive Anteil, während bei höheren Konzentrationen des Waschmittels der induktive Anteil überwiegt. Die Erfassung der Mizellen und somit der zu größeren Molekülen angelagerten Tenside (Aggregation) beruht auf der Änderung der Eigenschaften des flüssigen Elektrolyten in Form des Mediums 3 (beispielsweise der Waschlauge), wobei diese Veränderung erfasst werden kann. Weitere Einflussfaktoren bei der Bestimmung der Mizellbildungskonzentration bestehen in der Art des Waschmittels (und damit seiner Zusammensetzung), der Verschmutzung eines Waschguts hinsichtlich der Art und Intensität sowie der Qualität des verwendeten Frischwassers (Gesamthärte, Carbonathärte, Ca-/Mg-Verhältnis).

Gemäß der Darstellung in den Figuren 1 und 2 umfasst die Wascheinrichtung 9 eine Zuführungseinrichtung 12 für Waschmittel, die in der Weise ausgebildet ist, dass vorzugsweise eine umfassende Waschmittelmenge bevorratet wird und dass ferner vorbestimmte Waschmittelmengen durch die Steuerungseinrichtung 5 und/oder Steuereinheit 7 zum richtigen Zeitpunkt, d.h. jeweils dann, wenn eine Erhöhung der Waschmittelmenge zur Durchführung einer weiteren Erfassung erforderlich ist, der bestehenden Waschlauge zugeführt wird. Zu diesem Zweck. Zu diesem Zweck ist die Zuführungseinrichtung 12 mit der Steuerungseinrichtung 5 verbunden und gibt entsprechend der Steuerung durch die Steuerungseinrichtung 5 die vorbestimmte und zu diesem Zeitpunkt vorgesehene Waschmittelmenge in das Medium 3 bzw. die Waschlauge, so dass mit jedem dieser Vorgänge eine Teilmenge einer gesamten für einen jeweiligen Waschvorgang erforderliche Waschmittelmenge zugeführt wird. Die Zuführungseinrichtung 12 weist die entsprechenden technischen Einrichtungen auf zur Handhabung von festen (pulverförmigen) und/oder flüssigen Waschmitteln, so dass auch bei wechselnden zuzufügenden Waschmittelmengen diese genau gesteuert werden können. Grundsätzlich besteht die Möglichkeit, bei flüssigen und pulverförmigen Waschmitteln eine kontinuierliche Zuführung zu bewirken. Die vorliegende Beschreibung nimmt zur besseren Darstellung der Erfindung Bezug auf eine Zuführung mit diskreten Mengen gemäß der nachstehenden Beschreibung der Ausführungsbeispiele des Verfahrens.

### Erstes Ausführungsbeispiel

Nachstehend wird das Verfahren zum Erfassen einer Mizellkonzentration gemäß einem ersten Ausführungsbeispiel der vorliegenden Erfindung beschrieben.

Das Verfahren umfasst vorbestimmte Verfahrensschritte in Verbindung mit einem gesteuerten bzw. geregelten Dosiervorgang des Waschmittels (Hinzufügen von Waschmittelmengen zum Frischwasser bzw. zur Waschlauge) und darauf aufbauend eine entsprechende Auswertung der Erfassungsergebnisse in Verbindung mit der Impedanzspektroskopie. Das beschriebene Verfahren betrifft speziell die Erfassung der Mizellbildungskonzentration während des Dosiervorgangs als Teil des betreffenden Waschvorgangs, so dass nach dem Erkennen der kritischen Mizellbildungskonzentration (cmc) der Dosiervorgang beendet werden kann. Es wird danach kein weiteres Waschmittel hinzugefügt, da dann die optimale Waschmittelmenge zugeführt wurde und der restliche Teil des Waschvorgangs fortgesetzt werden kann.

Die Vorrichtung und das zugehörige Verfahren gemäß dem ersten Ausführungsbeispiel können ungeachtet eines beendeten Dosiervorgangs nach der Erfassung der kritischen Mizellbildungskonzentration weitere Messungen zur Überwachung und/oder zusätzlichen Steuerung oder Regelung des restlichen Teils des Waschvorgangs durchführen, die jedoch nicht mehr zu einer weiteren Waschmittelzugabe, sondern lediglich zu prozessbegleitenden Daten führen und beispielsweise die Waschdauer, die Waschtemperatur, die Wassermenge und die Zeitpunkte der Einleitung sowie der Anzahl der Spülvorgänge betreffen. Insbesondere kann die Impedanzspektroskopie Daten liefern, entsprechend denen ein optimales Spülen des Waschguts nach dem eigentlichen Waschvorgang gesteuert werden kann, so dass einerseits eine geringste Wassermenge verwendet wird und andererseits ein optimales Spülergebnis erhalten werden kann. Derartige Messungen können nach weiteren, hier nicht dargestellten Verfahren und zugehörigen Kriterien durchgeführt werden.

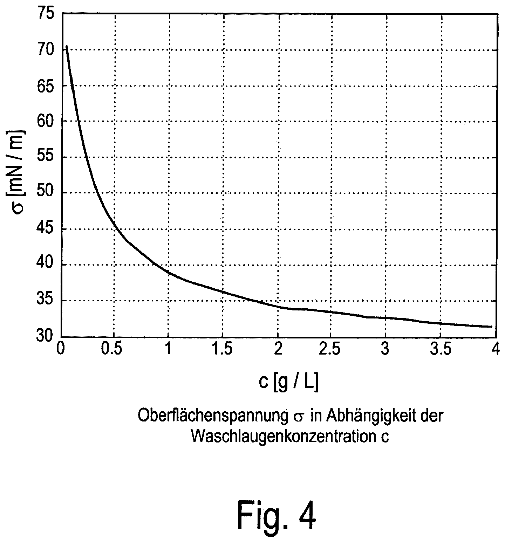

Fig. 4 zeigt eine graphische Darstellung einer Kennlinie der Oberflächenspannung σ in Abhängigkeit von der Waschlaugenkonzentration c (entsprechend einer Tensidkonzentration). Die in Fig. 4 gezeigte Kennlinie stellt einen Ausgangspunkt für die vorliegende Erfindung dar, wobei entsprechend den eingangs angegebenen Verfahren auf die bisherige bekannte Weise in Verbindung mit der Oberflächenspannung und/oder der elektrischen Leitfähigkeit die Bildung von Mizellen bestimmt wurde. Hinsichtlich der Leitfähigkeit des der Darstellung von Fig. 4 zugrundeliegenden Mediums (Waschlauge mit der Waschlaugenkonzentration c) ist zu beachten, dass bei einer Konzentration oberhalb der kritischen Mizellbildungskonzentration die Leitfähigkeit des Mediums nicht mehr zunimmt.

Im Allgemeinen bereitet es Probleme, während einer Messung in Verbindung mit einer aus den Messergebnissen gebildeten Kennlinie diesen Punkt mit bestehenden Verfahren (beispielsweise einer Leitwertmessung) zu erfassen. Wird beispielsweise gemäß Fig. 4 die Oberflächenspannung σ in Abhängigkeit von der Waschlaugenkonzentration c aufgetragen, ist erkennbar, dass mit der weichen Krümmung der Kennlinie von Fig. 4 der Punkt einer kritischen Mizellbildungskonzentration nicht sicher bzw. ungenau bestimmt werden kann.

Eine Kennlinie, bei der der Leitwert über der Waschlaugenkonzentration c aufgetragen ist, führt zu einem ähnlichen Ergebnis. Eine Leitwertmessung erfordert jeweilige Messreihen mit einer Erhöhung oder einer Verminderung der Konzentration, so dass derartige Messungen nicht auf einfache Weise außerhalb eines Labors angewendet werden können.

Das Verfahren zur Bestimmung der Mizellbildungskonzentration gemäß dem ersten Ausführungsbeispiel beruht auf der grundlegenden Anordnung der Vorrichtung 1 gemäß Fig. 1 mit den in Verbindung mit Fig. 1 beschriebenen Einrichtungen und Komponenten sowie nachstehend noch zu beschreibenden Einrichtungen. Es erfolgt die weitere Beschreibung am Bespiel einer Waschlauge (Medium 3), die in der Wascheinrichtung 9 und insbesondere dem Behälter 2 gemäß Fig. 1 oder dem Laugenbehälter 10 gemäß Fig. 2 gebildet wird. Die Durchführung von Erfassungen oder Messungen, wie sie nachstehend beschrieben werden, sowie die erforderlichen Auswertungen von Messergebnissen können programmgesteuert ablaufen und werden in der Steuerungseinrichtung 5 im Rahmen der Anwendung der Impedanzspektroskopie durch entsprechende Anweisungen durchgeführt. Hierbei erzeugt das betreffende Computerprogramm entsprechende Schritte zur Durchführung des Verfahrens, wenn das Computerprogramm in einer Computervorrichtung ausgeführt wird. Die Computervorrichtung wird durch die Steuerungseinrichtung 5 dargestellt.

Die Ansteuerungseinrichtung 6 wird mittels der Steuerungseinrichtung 5 angewiesen, Spannungssignale mit vorbestimmten Frequenzen oder Frequenzbereichen an die Sensoreinrichtung 4 anzulegen, und die sich ergebenden Ausgangssignale werden durch die Steuerungseinrichtung 5 direkt oder über die Ansteuerungseinrichtung 6 aufgenommen und in entsprechender Weise (programmgesteuert) verarbeitet. Die Verarbeitung umfasst vielfältige Arten von Berechnungen, Vergleichsoperationen und Speichervorgängen von erhaltenen Messwerten sowie auch der verarbeiteten Information. Programme und entsprechende Daten können in der Speichereinrichtung 8 gespeichert werden. Auf diese Information kann zu weiteren Zwecken, beispielsweise auch zur Darstellung auf einem Monitor, zugegriffen werden.

Dem Laugenbehälter 10 der Wascheinrichtung 9 gemäß Fig. 2 (entsprechend Behälter 2 gemäß Fig. 1) wird als Ausgangspunkt Frischwasser zugeführt und es befindet sich das Waschgut ebenfalls in dem Laugenbehälter. Die zugeführte Wassermenge an Frischwasser kann die allgemein für einen Waschvorgang erforderliche Wassermenge sein, oder eine Grundmenge, die später während des Waschvorgangs entsprechend weiterer Kriterien bei Bedarf ergänzt werden kann. Zur Vereinfachung der Darstellung wird von einer allgemeinen und anfangs ausreichenden Wassermenge für den nachfolgenden Waschvorgang und insbesondere den nachstehend beschriebenen Dosiervorgang des Waschmittels ausgegangen. Neben der speziellen Möglichkeit der Steuerung von Waschvorgängen im Hinblick auf eine minimale Umweltbelastung und einen minimalen Verbrauch an Wasser, Energie und Waschmittel stellt somit das nachstehend beschriebene Verfahren eine Dosierungssteuerung oder Dosierungsregelung für den beschriebenen Waschvorgang dar. Der Dosiervorgang stellt den anfänglichen Teil des gesamten Waschvorgangs dar und betrifft die in Verbindung mit der vorliegenden Erfindung gesteuerte oder geregelte Zuführung des Waschmittels, aufgeteilt in kleine Einzelmengen. Die jeweilige kleine Waschmittelmenge stellt eine erheblich kleinere Menge des Waschmittels als diejenige dar, die für den vollständigen Waschvorgang insgesamt erforderlich ist und die somit als eine Gesamtmenge des Dosiervorgangs betrachtet wird. Es wird somit zu Beginn des Verfahrens nicht die vollständige Waschmittelmenge in das Frischwasser eingebracht, sondern lediglich eine erste vorbestimmte Teilmenge in Form der vorbestimmten Grundmenge zur Einleitung des Waschvorgangs und zur Durchführung erster Erfassungen.

Beispielsweise kann die auf grundlegenden Erfahrungen beruhende voraussichtliche gesamte (somit geschätzte) Waschmittelmenge in eine Mehrzahl von gleichen oder unterschiedlichen Teilmengen, beispielsweise in 4 bis 20 Teilmengen aufgeteilt werden, und es wird zu Beginn des Waschvorgangs die erste Teilmenge (die erste vorbestimmte Waschmittelmenge, d.h. die Grundmenge m0) eingebracht, womit in physikalischer und chemischer Hinsicht eine erste vorbestimmte Menge an Tensiden entsprechend der Art und Zusammensetzung des Waschmittels in das Frischwasser zur Bildung der Waschlauge bzw. Medium 3 eingebracht wird. Es kann bei jedem nachstehend noch beschriebenen Zuführen einer weiteren Teilmenge an Waschmittel jedes Mal die vorbestimmte Grundmenge zugeführt werden, oder es kann die weitere zuzuführende Teilmenge in Abhängigkeit von der bereits seit Beginn des Dosiervorgangs kumulierten Waschmittelmenge von der Grundmenge m0 abweichen. Die Grundmenge m0 kann beispielsweise bestimmt werden aus einer in Versuchen ermittelten pauschalen Waschmittelmenge für einen üblichen Dosiervorgang, wobei die gesamte zu dosierende Menge zur Durchführung des Waschvorgangs in eine Anzahl kleiner Teilmengen mn aufgeteilt werden kann. Die Teilmengen mn können dabei gleich der oder unterschiedlich zur Grundmenge m0 sein und können hinsichtlich der Menge und der gewünschten Genauigkeit bestimmt werden.

Die Gesamtmenge besteht somit aus einer Grundmenge und einer vorbestimmten Anzahl von Teilmengen. Die Teilmengen können dabei gleich oder unterschiedlich sein. Sie können bestimmt werden in Abhängigkeit von der gewünschten oder erforderlichen Genauigkeit der Erfassung oder der Geschwindigkeit (d. h. dem Zeitbedarf) der Erfassung. Kleinere Teilmengen ergeben eine größere Genauigkeit der Erfassung, jedoch einen erhöhten Zeitbedarf. Die Teilmengen können vorbestimmte (zuvor festgelegte) Mengen sein, oder sich im Verlauf der Erfassungen während des Waschvorgangs ergeben, so dass beispielsweise die Teilmengen mn kleiner werden, je weiter sich die Erfassung der kritischen Mizellbildungskonzentration annähert. Es kann somit die Bestimmung der Teilmengen (ebenso wie auch die Bestimmung der Grundmenge m0) anwendungsabhängig und variabel erfolgen.

Ferner besteht die Möglichkeit, die mehreren Teilmengen mn, die im Verlauf des Dosiervorgangs der Waschlauge hinzuzufügen sind, entsprechend einem speziellen (mathematischen) Algorithmus zu bestimmen, der beispielsweise ebenfalls von der Anwendung abhängig sein kann.

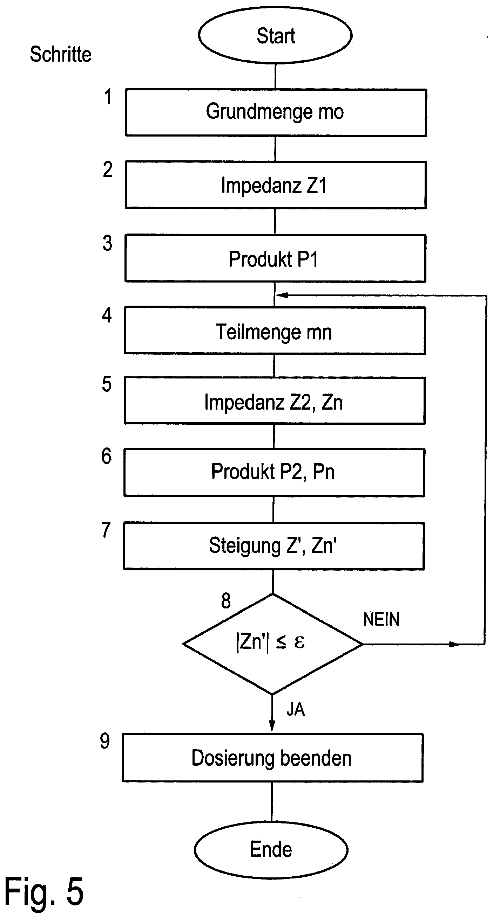

Figur 5 zeigt den Ablauf des Verfahrens zur Bestimmung einer kritischen Mizellbildungskonzentration in einer Waschlauge gemäß dem ersten Ausführungsbeispiel.

Nach der vorstehend beschriebenen Voraussetzung, dass sich in dem Behälter 2 eine ausreichende Menge an Frischwasser befindet, wird in einem ersten Schritt (Schritt 1 in Fig. 5) die Grundmenge m0 des Waschmittels zugegeben.

In einem zweiten Schritt (Schritt 2 in Fig. 5) erfolgt eine Impedanzmessung Z1 bei einer vorbestimmten Frequenz f1. Die vorbestimmte Frequenz ist ein fester Frequenzwert, beispielsweise 40 Hz oder 50 Hz, 500 Hz, 1000 Hz oder ein andere Wert der Frequenz f1, der aus einem vorbestimmten Frequenzbereich von beispielsweise 1 Hz bis 20 MHz, oder beispielsweise aus einem Frequenzbereich von 10 Hz bis 10 kHz bestimmt wird. Es ergibt sich in dem zweiten Schritt die Impedanz Z1 bei der Frequenz f1, die innerhalb des genannten Frequenzbereichs liegt. Das Erfassungsergebnis der Impedanzmessung mittels Impedanzspektroskopie wird gespeichert. Hierbei ergeben sich aus der Impedanzmessung von Z1 bei der Frequenz f1 ein Realteil Re (Z1) und ein Imaginärteil Im (Z1) der Impedanz Z1.

In einem nachfolgenden dritten Schritt (Schritt 3 in Fig. 5) wird das Produkt aus dem Realteil und dem Imaginärteil der Impedanz Z1 (bei der diskreten Frequenz f1) gemäß Re (Z1) · Im (Z1) = P1 gebildet. Das in der vorstehend beschriebenen Weise gebildete Produkt P1 aus dem Realteil und Imaginärteil der Impedanz Z1 wird gespeichert.

In einem nachfolgenden vierten Schritt (Schritt 4 in Fig. 5) erfolgt eine erneute Zugabe einer kleineren Waschmittelmenge mn, die eine weitere Waschmittelmenge zusätzlich zur Grundmenge m0 des Waschmittels gemäß dem ersten Schritt ist und gleich der Grundmenge m0 ist oder eine andere Teilmenge sein kann, die von der Grundmenge abweicht. In jedem Fall ist die vorbestimmte Teilmenge mn erheblich kleiner als die Gesamtmenge an Waschmittel, die für den vollständigen Waschvorgang (voraussichtlich, geschätzt) benötigt wird. Der Zusatz "n" (n ist eine natürliche Zahl) stellt einen Laufparameter dar, da im Verlauf des gesteuerten Dosiervorgangs des Waschmittels mehrere und in der Anzahl von der gesamten erfassten Situation der Waschlauge abhängige Teilmengen hinzugefügt werden.

In einem fünften Schritt (Schritt 5 in Fig. 5) erfolgt eine erneute Impedanzmessung für eine weitere Impedanz Z2 bei der Frequenz f1, d.h. bei derselben Frequenz aus dem vorbestimmten Frequenzbereich, die in Schritt 2 verwendet wurde. Im Vergleich zu Schritt 1 beruht die Impedanzmessung der Impedanz Z2 bei derselben Frequenz f1 auf der zwischenzeitlich gemäß Schritt 4 um die Teilmenge erhöhten Waschmittelmenge. Die Impedanz Z2 mit ihrem jeweiligen Realteil Re (Z2) und Imaginärteil Im (Z2) wird gespeichert.

In einem sechsten Schritt (Schritt 6 in Fig. 5) wird in gleichartiger Weise wie im dritten Schritt ein Produkt P2 aus dem Realteil und Imaginärteil der Impedanz Z2 bei der Frequenz f1 gebildet gemäß P2 = Re (Z2) · Im (Z2). Das Ergebnis wird gespeichert, wobei dies in der Steuerungseinrichtung 5 oder auch in der Speichereinrichtung 8 gemäß Fig. 1 erfolgen kann.

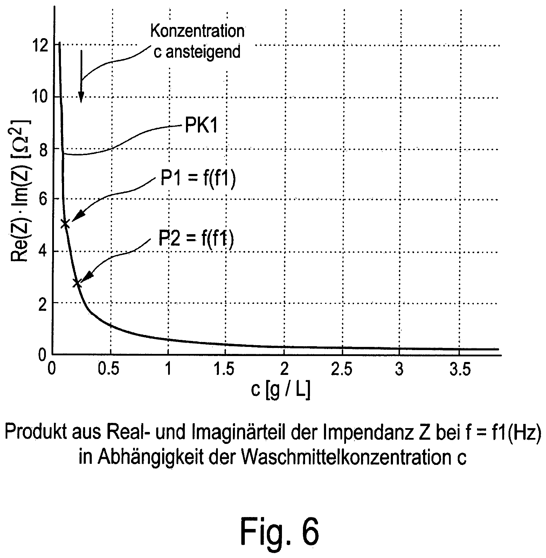

Mit der gemäß Schritt 4 hinzugefügten weiteren Teilmenge des Waschmittels liegen für die beiden Impedanzmessungen gemäß Schritt 2 und Schritt 5 unterschiedliche Bedingungen (unterschiedliche Tensidmengen in der Waschlauge) vor, so dass die beiden Impedanzmessungen der Schritte 2 und 5 zumindest geringfügig unterschiedliche Werte der erfassten Impedanzen Z1 bzw. Z2 ergeben. In diesem Zusammenhang zeigt Fig. 6 eine Kennlinie der jeweiligen Produkte aus Real- und Imaginärteil, wie P1 und P2, in Abhängigkeit von der Konzentration c des Waschmittels. Die als erste Produktkennlinie PK1 bezeichnete Kennlinie von Fig. 6 aus einer Vielzahl von Produkten wird nachstehend noch im Einzelnen erläutert.

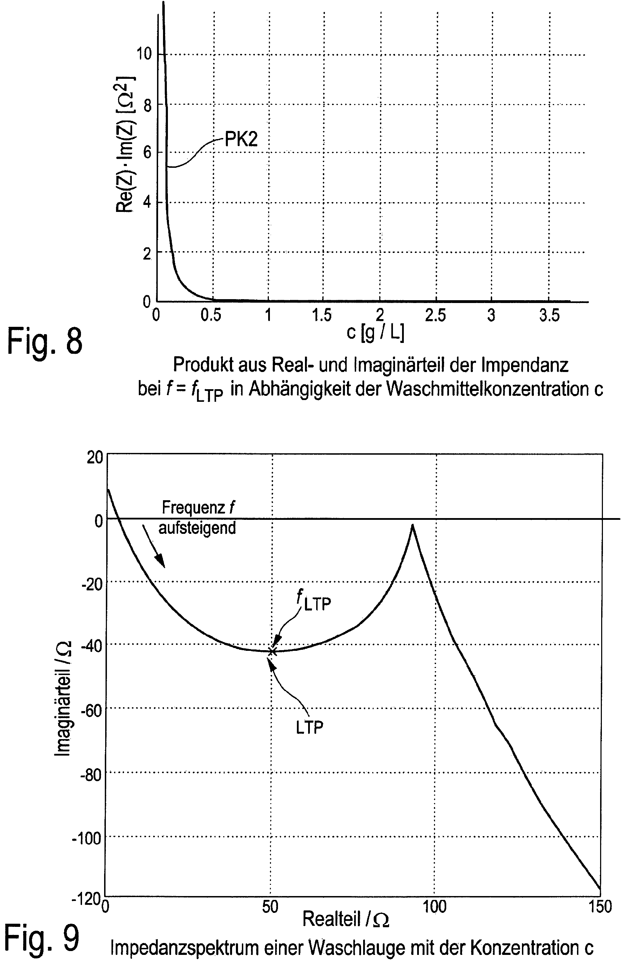

In einem nachfolgenden siebten Schritt (Schritt 7 in Fig. 5) erfolgt die numerische Ableitung der ersten Produktkennlinie PK1 (gemäß Fig. 6) im Allgemeinen und speziell die Ermittlung der Steigung (Änderung der Werte) zwischen den beiden Produkten aus den zugehörigen Impedanzen Z1 und Z2, die mit ihrem jeweiligen Real- und Imaginärteil in einer Impedanzebene (komplexe Impedanzebene) im Rahmen der Impedanzspektroskopie hinsichtlich Ihrer Lage veranschaulicht werden können. Eine Kennlinie als Ergebnis der Anwendung der Impedanzspektroskopie ist in Fig. 9 gezeigt, die nachstehend noch beschrieben wird.

In einem achten Schritt (Schritt 8 in Fig. 5) wird eine Entscheidung getroffen hinsichtlich der Auswertung der beiden gemessenen Impedanzen Z1 und Z2 bei derselben Frequenz f1, jedoch bei unterschiedlichen Waschmittel- bzw. Tensidkonzentrationen. Beispielhaft sind in der ersten Produktkennlinie PK1 die beiden gemäß dem Verfahren erfassten Punkte der Produkte P1 und P2 gezeigt.

Im Einzelnen wird in Schritt 8 ermittelt, ob die erfassten Unterschiede zwischen den Produkten der jeweiligen Impedanzen Z1 und Z2 (unter Berücksichtigung eines Toleranzbereichs ± ε gleich oder annähernd Null ist. Hierbei ist ε eine positive reelle Zahl. Mit Z' ist die Steigung angegeben, die aus den jüngsten aufeinanderfolgenden Messungen der Impedanz Z1 und Z2 gewonnen wurde. Die Steigung Z' wird mit dem Toleranzbereich ± ε betrachtet, d. h. es wird bestimmt gemäß Schritt 8, ob der Betrag der Steigung Z' kleiner als der oder gleich dem Toleranzwert ε ist und ob sie damit innerhalb des Toleranzbereichs ± ε um den Wert Null (d. h. in der Nähe von Null) liegt. Ohne Berücksichtigung von Toleranzen wäre der ideale Wert Z' = 0, wobei jedoch im Hinblick auf eine verwertbare Messung ein Toleranzbereich in Verbindung mit der Bestimmung des Toleranzwerts ε sinnvoll ist. Der Toleranzwert ε und damit der Toleranzbereich ± ε können in Abhängigkeit von einer gewünschten Genauigkeit bestimmt werden, wobei ein kleinerer Toleranzwert ε zu einer größeren Genauigkeit, jedoch auch zu einem erhöhten Erfassungsaufwand führt.

In Schritt 8 wird bestimmt, ob der Betrag der Steigung Z' aus den jeweiligen Differenzen der Produkte P1, P2 aus den Real- und Imaginärteilen der jeweiligen Impedanzen Z1 und Z2 innerhalb des Toleranzbereichs ± ε liegen, und zwar ungeachtet des Vorzeichens der Differenz.

Wird somit in Schritt 8 einerseits bestimmt, dass die Bedingung IZ'I ≤ ε gilt und somit die daraus resultierende Frage mit JA beantwortet, wird das Verfahren der Dosierungssteuerung unmittelbar durch Übergang auf einen nachfolgenden neunten Schritt (Schritt 9 in Fig. 5) beendet und es wird der Waschvorgang ohne Hinzufügen einer weiteren Waschmittelmenge fortgesetzt (Dosierung wird beendet).

Wird andererseits die Frage (Entscheidung) gemäß Schritt 8 mit NEIN beantwortet, und gilt somit IZ'I > ± ε, erfolgt ein Rücksprung vor den Schritt 4 in der Darstellung des Ablaufdiagramms gemäß Fig. 5, so dass das Verfahren gemäß dem ersten Ausführungsbeispiel ab Schritt 4 erneut durchgeführt wird und eine weitere Teilmenge mn des Waschmittels zur Erhöhung der Konzentration c hinzugefügt wird, worauf die weiteren Schritte 5 bis 8 gemäß dem Ablaufdiagramm von Fig. 5 bearbeitet werden.

Mit jeder Entscheidung in Schritt 8, dass die Steigung Z1 noch nicht innerhalb des Toleranzbereichs ± ε um den Wert Null liegt, erfolgt ein weiterer Durchlauf der Schritte 4 bis 8, wobei jeweils Z-Werte Zn-1 und Zn einer aktuellen Messung n (n ist eine natürliche Zahl) ermittelt werden. In der Folge werden mit jedem Durchlaufen des Schritts 6 die jeweiligen Produkte Pn-1 und Pn aufeinanderfolgender Impedanzmessungen gebildet, die in der ersten Produktkennlinie PK1 dargestellt werden können (Fig. 1). Hieraus werden jeweilige Steigungen Zn' bestimmt. Zusammengefasst werden daher mit jedem erneuten Durchlaufen der Schritte 4 bis 8 neue Messungen (mit jeweils ergänzten Teilmengen mn) durchgeführt und neue Werte der Impedanzen Zn sowie neue Werte der Produkte Pn erhalten, aus denen die erste Produktkennlinie PK1 gebildet werden kann und jeweilige Steigungen berechnet werden können, solange die ermittelte Steigung (Ableitung) der ersten Produktkennlinie PK1 nicht innerhalb des Toleranzbereichs von ± ε liegt.

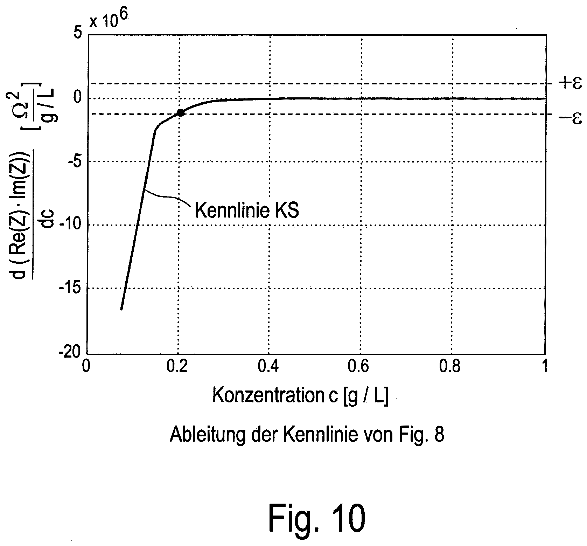

Mit jedem Durchlaufen der Schritte 4 bis 8 wird gemäß Schritt 4 eine weitere (gleich große oder auch unterschiedliche) Teilmenge mn des Waschmittels hinzugefügt, bis die Entscheidung in Schritt 8 JA ist und somit der Betrag IZ'I der ermittelten Steigung Z' der zugehörigen Produkte jeweils aufeinanderfolgend erfasster Z-Werte innerhalb des Toleranzbereichs von ± ε liegt. Die Vielzahl der ermittelten Steigungen Zn' kann in Form einer Kennlinie, der Steigungskennlinie SK über der Konzentration c gemäß Fig. 10 dargestellt werden.

Als Grundlage hierfür zeigt Fig. 6 die erste Produktkennlinie PK1 der Produkte P1, P2, ..., Pn-1, Pn aus dem Realteil und dem Imaginärteil der gemessenen Impedanzen Z1 bis Zn über der Konzentration c. Mit jeder gemessenen Impedanz Z1 bis Zn bei erforderlichen n Messungen (n ist eine natürliche Zahl) kann ein weiterer Punkt der ersten Produktkennlinie PK1 gemäß Fig. 6 bestimmt werden.

Fig. 10 zeigt die Darstellung der Steigungskennlinie KS, die gebildet wird aus den Steigungen Zn (d. h. der numerischen Ableitung der ersten Produktkennlinie PK1 gemäß Fig. 6) über der Waschlaugenkonzentration c (Konzentration des Waschmittels bzw. der Tenside). Im Vergleich zur ersten Produktkennlinie PK1 weist die Steigungskennlinie SK einen für eine Erfassung günstigeren Verlauf (stärkere Krümmung) auf, so dass das Auftreten der kritischen Mizellbildungskonzentration klarer erkennbar ist. In Verbindung mit dem Toleranzbereich ± ε um den idealen Wert Null kann eine verlässliche Erfassung der kritischen Mizellbildungskonzentration durchgeführt werden, so dass damit ein genau zu bestimmendes Kriterium zum Beenden des Dosierungsvorgangs (und damit zur Beendigung des Hinzufügens von Waschmittel) erhalten werden kann.

Gemäß Figur 10 ist erkennbar, dass mit einem kleineren Wert des Toleranzwerts ε das Auftreten der kritischen Mizellbildungskonzentration genauer bestimmt werden kann, jedoch der Dosiervorgang kleinere Teilmengen erfordert und länger dauert. Es ist dabei eine Mehrzahl der Durchläufe der Schritte 4 bis 8 gemäß Fig. 5 erforderlich. Mit einem etwas größeren Wert des Toleranzwerts ε kann das Auftreten der kritischen Mizellbildungskonzentration (bzw. eine Situation ganz in der Nähe der kritischen Mizellbildungskonzentration) relativ schnell bestimmt werden, so dass mit der Festlegung der Größe des Toleranzwerts ε Geschwindigkeit und Genauigkeit in Verbindung mit jeweiligen Anforderungen an ein verlässliches Gesamtergebnis bestimmt werden können. Fig. 10 zeit schematisch den Einfluss des Toleranzbereichs ± ε.

Wurde beispielsweise gemäß Fig. 10 ermittelt, dass der Betrag der Steigung innerhalb des vorbestimmten Toleranzbereichs ± ε liegt, ist damit die kritische Mizellbildungskonzentration erreicht, so dass die hinzugefügte Menge an Waschmittel und damit die in der Waschlauge befindliche Menge an Tensiden eine optimale Menge für den betreffenden Prozess (Waschvorgang) darstellt und dass ein weiteres Hinzufügen von Waschmittel und ein Verlängern des Waschvorgangs mit einer weiter gesteigerten Waschmittelkonzentration (Tensidkonzentration) die Wirksamkeit des Waschvorgangs nicht fördert sondern eher nachteilig beeinflusst. Im Allgemeinen wird mit einem weiteren Hinzufügen von Waschmittel und Verlängern des betreffenden Waschzyklus das Ergebnis verschlechtert.

Mit der Antwort JA der Entscheidung in Schritt 8 wird gemäß dem nachfolgenden neunten Schritt die Steuerung oder Regelung der Dosierung des Waschmittels beendet, und es kann der Waschvorgang mit den weiteren üblichen Maßnahmen wie Entfernen der Waschlauge und Durchführen der Spülvorgänge in Verbindung mit einem Schleudern fortgesetzt werden.

Mit der Erfassung der kritischen Mizellbildungskonzentration gemäß dem vorstehend beschriebenen Verfahren der Schritte 1 bis 9 wird eine minimale Waschmittelmenge eingesetzt für ein gleichzeitig optimales Waschergebnis in der betreffenden Situation (auch abhängig von der Wasserqualität wie beispielsweise der Wasserhärte und dem Verschmutzungsgrad des Waschguts), so dass auch bei einer geringen Verschmutzung ein Waschvorgang unter Schonung von Ressourcen und unter Berücksichtigung von Umweltaspekten verkürzt ablaufen kann. Mit der Automatisierung der Dosierungssteuerung ist es für den Benutzer einer Wascheinrichtung oder auch bei einer industriellen Anlage nicht mehr erforderlich, den eigentlichen Waschvorgang manuell zu überwachen oder die tatsächlich einzusetzende Waschmittelmenge abzuschätzen. Vielmehr genügt eine grobe Schätzung der möglichen Waschmittelmenge, um daraus eine anfängliche Grundmenge und weitere Teilmengen zu bestimmen. Im Allgemeinen wird in Verbindung mit der Steuerung oder Regelung der Dosierung gemäß der vorliegenden Erfindung die vorab geschätzte gesamte Waschmittelmenge nicht benötigt. Mit dem vorstehend beschriebenen Verfahren zur Erfassung der Mizellbildungskonzentration, und insbesondere im Hinblick auf einen ablaufenden Waschvorgang das Erfassen der kritischen Mizellbildungskonzentration, werden somit die gewünschten Einsparungen erreicht bei gleichzeitig optimiertem Waschergebnis und geringster Umweltbelastung.

Die Vorrichtung 1 zur Durchführung des Verfahrens umfasst die in Zusammenhang mit den Fig. 1 und 2 beschriebenen Einrichtungen und Komponenten. Die Vorrichtung 1 umfasst gemäß dem ersten Ausführungsbeispiel ferner eine Einrichtung zum Zuführung einer Grundmenge eines Waschmittels zur Wassermenge zur Bildung einer Waschlauge bzw. des Mediums 3 in Verbindung mit der Zuführungseinrichtung 12 gemäß den Fig. 1 und 2, eine Einrichtung zum Erfassen der Impedanz der Waschlauge bei einer vorbestimmten Frequenz mit einem Realteil und einem Imaginärteil, eine Einrichtung zum Bestimmen eines Produkts aus dem Realteil und dem Imaginärteil der Impedanz, eine Einrichtung zum Hinzufügen einer weiteren Teilmenge mn des Waschmittels zur Waschlauge in Verbindung mit der Zuführungseinrichtung 12 gemäß den Fig. 1 und 2, eine Einrichtung zum Erfassen einer weiteren Impedanz bei der vorbestimmten Frequenz f1 mit einem Realteil und einem Imaginärteil der vorliegenden Waschlauge, eine Einrichtung zum Bestimmen eines weiteren Produkts aus dem Realteil und dem Imaginärteil der weiteren Impedanz, eine Einrichtung zum Bestimmen der Steigung Z' zwischen den zuvor ermittelten Produkten in Abhängigkeit von einer Waschlaugenkonzentration, eine Einrichtung zum Bestimmen, ob der Betrag der Steigung kleiner als ein oder gleich einem Toleranzwert ε ist und Wiederholen der Schritte 4 bis 8, falls der Betrag der Steigung größer als der Toleranzwert ε ist, und eine Einrichtung zum Beenden des Verfahrens, wenn der Betrag der Steigung kleiner als der oder gleich dem Toleranzwert ε ist. Die vorstehenden Einrichtungen werden im Wesentlichen durch die Steuerungseinrichtung 5 in Verbindung mit einem entsprechenden Computerprogramm gebildet.

### Zweites Ausführungsbeispiel

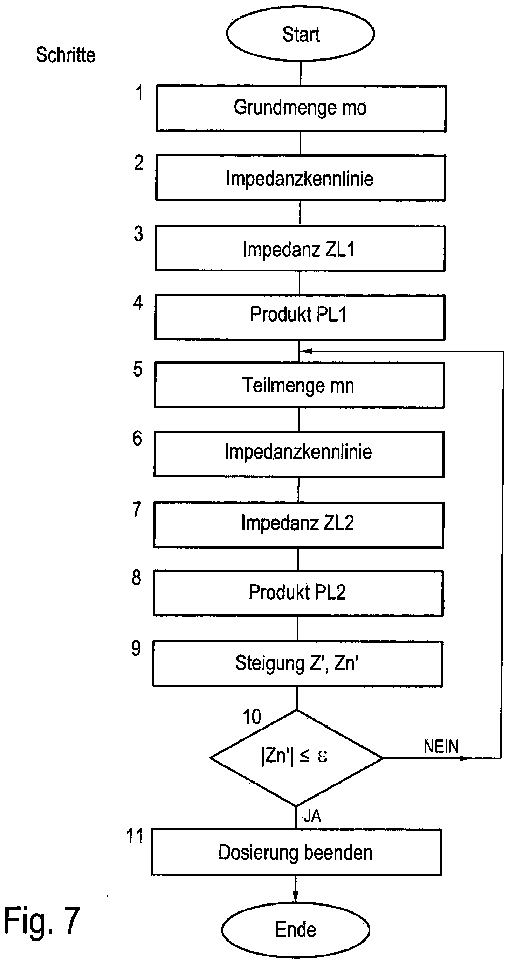

Nachstehend wird unter Bezugnahme auf die Figuren 7 bis 10 ein zweites Ausführungsbeispiel des Verfahrens zur Bestimmung der Mizellbildungskonzentration beschrieben.

Fig. 7 zeigt ein Ablaufdiagramm des Verfahrens gemäß dem zweiten Ausführungsbeispiel mit den Schritten 1 bis 11.

Ausgangspunkt zur Durchführung des Verfahrens ist in gleicher Weise wie bei dem ersten Ausführungsbeispiel eine Vorrichtung gemäß Fig. 1 und die Anwendung der Vorrichtung gemäß Fig. 2, wobei die Wascheinrichtung, an deren Beispiel das Verfahren beschrieben wird, als Ausgangspunkt oder Startpunkt des Verfahrens einen mit dem Waschgut und einer entsprechenden Wassermenge gefüllten Laugenbehälter 10 (entsprechend Behälter 2 und Fig. 1) aufweist.

In einem ersten Schritt (Schritt 1 in Fig. 7) wird eine kleine Waschmittelmenge in Form einer Grundmenge m0 als minimal benötigte Waschmittelmenge zu Anfang der Dosierungssteuerung gemäß dem zweiten Ausführungsbeispiel dem im Laugenbehälter 10 befindlichen Frischwasser hinzugefügt. Mit der Grundmenge m0 des Waschmittels ist auch eine Grundmenge an Tensiden in der nun entstandenen Waschlauge 3 vorhanden.

In einem nachfolgenden zweiten Schritt (Schritt 2 in Fig. 7) wird das Impedanzspektrum innerhalb eines vorbestimmten weiten Frequenzbereichs ermittelt, und es wird in einem dritten Schritt (Schritt 3 in Fig. 7) die Frequenz fLTP1 bestimmt, bei der innerhalb des Impedanzspektrums der Waschlauge 3 mit einer bestimmten Konzentration c der lokale Tiefpunkt LTP auftritt. Es wird in diesem Zusammenhang auf die Darstellung von Fig. 9 verwiesen, bei der in der komplexen Impedanzebene mit Realteil und Imaginärteil der Impedanz die vollständige Impedanzkennlinie K veranschaulicht ist. Der in der Impedanzkennlinie K von Fig. 9 eingezeichnete lokale Tiefpunkt LTP kann mit einem entsprechenden Algorithmus bestimmt werden. Er kann auch als erster lokaler Tiefpunkt LPT1 bezeichnen werden. Die Impedanzkennlinie wird über einen gesamten Frequenzbereich (0 ≤ f ≤ fmax) ermittelt. Der Frequenzbereich kann dabei beispielsweise einen Bereich von etwa 10 kHz bis 10 MHz umfassen.

In einem vierten Schritt (Schritt 4 in Fig. 7) wird ein Produkt PL1 aus dem Re (ZL1) · Im (ZL1) = PL1. Die gewonnenen Werte werden in Verbindung mit der Steuerungseinrichtung 5 oder der Speichereinrichtung 8 gespeichert. Das Produkt PL1 kann gemäß Fig. 8 in eine zweite Produktkennlinie PK2 des jeweiligen Produkts über der Waschlaugenkonzentration c eingetragen werden.

In einem nachfolgenden fünften Schritt (Schritt 2 in Fig. 7) wird eine kleine Waschmittelmenge mn in Form einer zuvor abgeschätzten Teilmenge zu der bisher in dem Laugenbehälter 10 befindlichen Waschmittelmenge hinzugefügt, so dass nunmehr eine größere Waschmittelmenge und damit auch eine größere Tensidmenge in der Waschlauge 3 vorhanden ist.

In einem nachfolgenden sechsten Schritt (Schritt 6 in Fig. 7) erfolgt eine erneute Messung des Impedanzspektrums gemäß der Darstellung in Fig. 9 und das erneute Bestimmen des Impedanzspektrums bzw. einer weiteren Impedanzkennlinie und Bestimmen der Frequenz fLTP2 des lokalen Tiefpunkts in Verbindung mit der zusätzlich zugefügten Waschmittelmenge in der Waschlauge 3.

In einem siebten Schritt (Schritt 7 in Fig. 7) erfolgt die Bestimmung der weiteren Impedanz ZL2 bei der neu ermittelten Frequenz f = fLTP2. Somit wird gemäß dem siebten Schritt die Impedanz ZL2 an der neu ermittelten Stelle des lokalen Tiefpunkts LTP2 in Verbindung mit dem Impedanzspektrum bei der gegenwärtigen (erhöhten) Waschmittelmenge oder Tensidmenge bestimmt. Gemäß dem Ablaufdiagramm von Fig. 7 besteht somit im gesamten bisherigen Ablauf eine zweite Impedanz ZL2 mit der vergrößerten Waschmittelmenge in der Waschlauge.

In gleicher Weise wie in Schritt 4 wird in Verbindung mit der Impedanz ZL2 gemäß einem nachfolgenden Schritt 8 (Schritt 8 in Fig. 7) ein weiteres Produkt PL2 gebildet aus dem jeweiligen Realteil und Imaginärteil der Impedanz ZL2 gemäß PL2 = Re (ZL1) · Im (ZL2). Es wird auf diese Weise ein zweiter lokaler Tiefpunkt LPT2 in der komplexen Impedanzebene gemäß Fig. 9 betrachtet, der sich auf Grund der geänderten Waschmittelmenge und damit der Waschlaugenkonzentration an einer anderen Stelle im Impedanzspektrum befindet und somit zu dem zweiten Produkt PL2 führt. Es wird das zweite Produkt auf der Basis des zweiten lokalen Tiefpunkts LTP2 ebenfalls in die zweite Produktkennlinie PK2 gemäß Fig. 8 eingetragen.

Im Zusammenhang mit den Schritten 4 und 8 sind somit gemäß Fig. 8 in der zweiten Produktkennlinie die Produkte aus dem Realteil und dem Imaginärteil der Impedanzen ZL1 und ZL2 bei der jeweiligen Frequenz fLTP, d. h. in Bezug auf die jeweilige Frequenz des jeweiligen lokalen Tiefpunkts über der Waschmittelkonzentration c dargestellt. In dem bisher beschriebenen Teil des Verfahrens gemäß dem zweiten Ausführungsbeispiel sind zwei Impedanzen ZL1 und ZL2 in Verbindung mit der Grundmenge des Waschmittels und der zusätzlich hinzugefügten Teilmenge in Verbindung mit der Kennlinie in Fig. 9 bestimmt. Gemäß der nachfolgenden Beschreibung werden weitere Punkte zur Bildung der Kennlinie gemäß Fig. 8 bestimmt.

In einem neunten Schritt (Schritt 9 in Fig. 7) werden die beiden Impedanzen ZL1 und ZL2 in der komplexen Impedanzebene betrachtet und die Steigung Z' zwischen den Produkten aus dem jeweiligen Real- und Imaginärteil bestimmt. Die Steigung Z' wird zwischen der aktuellen und der vorherigen Erfassung der jeweiligen Impedanz (im vorliegenden Fall der Impedanzen ZL1 und ZL2) bestimmt und in gleichartiger Weise wie beim ersten Ausführungsbeispiel ausgewertet. Hierbei wird die Steigungskennlinie KS gemäß Fig. 10 gebildet, die in gleichartiger Weise für die Auswertung der Erfassungsergebnisse des zweiten Ausführungsbeispiels gilt.

Hinsichtlich der Auswertung der Steigung zwischen den bisher ermittelten Impedanzen ZL1 und ZL2 ist gemäß einem zehnten Schritt (Schritt 10 in Fig. 7) vorgesehen, die sich ergebende Steigung Z' bzw. der Betrag derselben mit einem Bereich von Grenzwerten zu vergleichen, wobei in gleichartiger Weise wie beim ersten Ausführungsbeispiel ein Toleranzwert ε bestimmt ist. Es wird somit gemäß Schritt 10 eine Entscheidung getroffen, ob der Betrag der aktuell ermittelten Steigung Z' kleiner oder allenfalls gleich dem Toleranzwert ε ist.

Wird somit in Schritt 10 einerseits bestimmt, dass die Bedingung IZ'I ≤ ε gilt und somit die daraus resultierende Frage mit JA beantwortet, wird das Verfahren der Dosierungssteuerung in Verbindung mit einem nachfolgenden elften Schritt (Schritt 11 in Fig. 7) unmittelbar beendet und es wird der übrige (bzw. restliche) Waschvorgang ohne Hinzufügen einer weiteren Waschmittelmenge (Teilmenge) fortgesetzt.

Wird andererseits die Aussage der Ungleichung IZ'I ≤ ε mit NEIN beantwortet, d. h. ist der Betrag der Steigung zwischen den Produkten PL1 und PL2 in der zweiten Produktkennlinie PL2 noch größer als der Toleranzwert ε, dann springt das vorliegende Verfahren zurück vor Schritt 5, so dass mit der nachfolgenden erneuten Ausführung des fünften Schritts (und der weiteren folgenden Schritte) eine weitere Teilmenge mn der gesamten Waschmittelmenge (und damit erneut eine weitere Menge an Tensiden) der bestehenden Waschlauge hinzugefügt wird.

Es werden entsprechend dem vorliegenden Verfahren gemäß dem zweiten Ausführungsbeispiel die Schritte 5 bis 10 solange durchgeführt und daher bei jedem Durchlauf eine weitere Teilmenge mn des Waschmittels hinzugefügt, bis der in jedem Durchlauf der Schritte 5 bis 10 ermittelte Betrag der jeweilige Steigung Zn' zwischen aufeinanderfolgend ermittelten Produkten der Impedanzen ZLn-1 und ZLn (bei n-maligem Durchlaufen der Schritte 5 bis 10, n ist eine natürliche Zahl) kleiner oder allenfalls gleich dem Toleranzwert ε ist. Auf diese Weise wird die vollständige zweite Produktkennlinie PK2 der jeweiligen Produkte über der Waschlaugenkonzentration c gemäß Fig. 8 gebildet.

Wird daher in Schritt 10 bestimmt, dass die Antwort JA ist und somit die Ungleichung erfüllt ist, dass IZ'I ≤ ε gilt, erfolgt ein Übergang zu Schritt 11, bei welchem die Steuerung oder Regelung der Dosierung beendet wird und keine weitere Zugabe an Waschmittel erfolgt. Mit dem Kriterium, dass der Betrag der Steigung Z' betreffender Erfassungen kleiner als oder gleich dem Toleranzwert ε ist, wurde die kritische Mizellbildungskonzentration (in Verbindung mit Toleranzen) bestimmt, so dass das Optimum des Waschvorgangs erreicht ist und eine Weiterführung der Dosierung für das Waschergebnis in ökologischer und ökonomischer Hinsicht zumindest zu diesem Zeitpunkt des Waschvorgangs nachteilig ist. Mit der Beendigung der Steuerung oder der Regelung der Dosierung gemäß Schritt 11 in Fig. 7 kann der weitere Waschvorgang fortgesetzt werden.

Das gesamte Verarbeitungsprogramm, das in der Steuereinheit 7 der Wascheinrichtung 9 (Figuren 1 und 2) verarbeitet wird, kann dabei für den weiteren Waschvorgang in eine Betriebsart eintreten, bei der nach Erreichen der kritischen Mizellbildungskonzentration und einer beendeten Dosierung das Medium 3 (d. h. die Waschlauge) zyklisch während des fortgesetzten Waschvorgangs durch Erfassungen überwacht wird. Diese Überwachung des Mediums 3 steht nicht im Zusammenhang mit einer Steuerung oder Regelung der Dosierung, da diese zuvor abgeschlossen wurde. Es kann jedoch auf diese Weise erkannt werden, ob danach im weiteren Waschvorgang und einer fortgesetzten Beseitigung einer Verschmutzung des Waschguts erneut die kritische Mizellbildungskonzentration und damit der Toleranzbereich ± ε verlassen wurde.

Damit der weitere Waschvorgang unter diesen Bedingungen nicht geschwächt wird, kann in diesem Fall eine Nachdosierung erfolgen, wobei wieder in das Dosierungsverfahren gemäß der vorstehenden Beschreibung eingetreten wird. Das wieder aufgenommene Dosierungsverfahren wird in gleicher Weise beendet, wenn erneut der ermittelte Betrag der jeweilige Steigung Zn' zwischen aufeinanderfolgend ermittelten Produkten der Impedanzen ZLn-1 und ZLn kleiner oder allenfalls gleich dem Toleranzwert ε ist.

Es besteht daher die Möglichkeit, während des weiteren Waschvorgangs die Eigenschaften der Waschlauge (Medium 3) in größeren Zeitabständen (verlängerter Erfassungstakt) und ohne eine weitere Dosierung zu Erfassen und erst bei einem konkreten durch die Erfassung nachgewiesenen Bedarf erneut in das Dosierungsverfahren einzutreten. Hierbei können Kriterien festgelegt werden, gemäß denen ein erneutes Eintreten in das Dosierungsverfahren erfolgt, beispielsweise in Abhängigkeit von dem ermittelten Abstand zum Toleranzbereich ± ε. Ebenso kann der Toleranzbereich ± ε und speziell der Toleranzwert ε nach Erreichen der kritischen Mizellbildungskonzentration für den weiteren Waschvorgang verändert werden. Nach Erreichen des Toleranzbereichs ± ε kann dann wieder der weitere Waschvorgang fortgesetzt werden, beispielsweise in Verbindung mit einem Entfernen der Waschlauge und den erforderlichen Spülvorgängen. Diese Vorgehensweise gilt gleichermaßen für beide vorstehend beschriebene Ausführungsbeispiele des erfindungsgemäßen Verfahrens.

Fig. 10 zeigt in diesem Zusammenhang die Abhängigkeit der jeweiligen Steigungswerte Zn' (numerische Ableitung) aus den Produkten PLn aus dem jeweiligen Realteil und Imaginärteil der ermittelten Impedanz ZLn bei verschiedenen Erfassungen von der Konzentration c der Waschlauge. Es ist gemäß Fig. 10 erkennbar, dass sich die aus der Erfassung ergebende Steigungskennlinie KS bei zunehmender Konzentration c des Waschmittels in der Waschlauge (Waschlaugenkonzentration) und damit einer zunehmenden Tensidmenge in der Waschlauge dem Wert 0 annähert, so dass nach einer Erhöhung der Waschlaugenkonzentration c und damit der in der Waschlauge befindlichen Tensidmenge die interessierende kritische Mizellbildungskonzentration einerseits erreicht und andererseits auch messtechnisch erfasst werden kann.

Im Einzelnen wird in gleicher Weise wie beim ersten Ausführungsbeispiel in Verbindung mit dem Toleranzbereich ± ε das Eintreten der Steigungskennlinie KS in den Toleranzbereich ± ε ermittelt. Mit den Eintreten der Steigungskennlinie KS in den Toleranzbereich ± ε ist die kritische Mizellbildungskonzentration erreicht bzw. die Waschlaugenkonzentration liegt ganz in der Nähe, so dass die Dosierung beendet werden kann (Schritt 11 in Fig. 7).

Dies ist in Fig. 10 veranschaulicht. Bei der Bestimmung der Impedanzkennlinien kann die Erfassung der Impedanzkennlinie über einen gesamten Frequenzbereich (0 ≤ f ≤ fmax) zur Erfassung einer vollständigen Impedanzkennlinie oder über einen Teilbereich des Frequenzbereichs erfolgen, in dem der lokale Tiefpunkt LTP sicher erwartet wird.

Die Vorrichtung 1 zur Durchführung des Verfahrens umfasst die in Zusammenhang mit Fig. 1 und 2 beschriebenen Einrichtungen und Komponenten. Die Vorrichtung 1 umfasst gemäß dem zweiten Ausführungsbeispiel ferner: eine Einrichtung zum Zuführung einer Grundmenge m0 eines Waschmittels zur Wassermenge zur Bildung einer Waschlauge in Verbindung mit der Zuführungseinrichtung 12 gemäß den Fig. 1 und 2, eine Einrichtung zum Erfassen der Impedanzkennlinie der Waschlauge und Bestimmen einer Frequenz des lokalen Tiefpunkts LTP der Impedanzkennlinie, eine Einrichtung zum Bestimmen der Impedanz bei der Frequenz mit einem Realteil und einem Imaginärteil, eine Einrichtung zum Bestimmen eines Produkts aus dem Realteil und dem Imaginärteil der Impedanz, einer Einrichtung zum Hinzufügen einer weiteren Teilmenge mn des Waschmittels zur Waschlauge, eine Einrichtung zum Bestimmen einer weiteren Impedanzkennlinie der vorliegenden Waschlauge und Bestimmen einer Frequenz eines lokalen Tiefpunkts der Impedanzkennlinie, einer Einrichtung zum Bestimmen einer Impedanz bei der Frequenz mit einem Realteil und einem Imaginärteil, eine Einrichtung zum Bestimmen eines Produkts aus dem Realteil und dem Imaginärteil der Impedanz, eine Einrichtung zum Bestimmen der Steigung Z' zwischen den zuvor ermittelten Produkten in Abhängigkeit von der Waschlaugenkonzentration, eine Einrichtung zum Bestimmen, ob der Betrag der Steigung Z' (Zn') kleiner als oder gleich dem Toleranzwert ε ist, und Wiederholen der Schritte 4 bis 9, falls der Betrag der Steigung größer als der Toleranzwert ε ist, und eine Einrichtung zum Beenden des Verfahrens, wenn der Betrag der Steigung kleiner als der oder gleich dem Toleranzwert ε ist. Die vorstehenden Einrichtungen werden im Wesentlichen durch die Steuerungseinrichtung 5 in Verbindung mit einem entsprechenden Computerprogramm gebildet.

Grundsätzlich werden mit beiden Ausführungsbeispielen im Wesentlichen die gleichen Vorteile erzielt, indem sowohl in Bezug auf ökologische als auch ökonomische Vorteile die tatsächlich erforderliche Waschmittelmenge zum Erreichen eines optimalen Waschvorgangs (in Verbindung mit der kritische Mizellbildungskonzentration) bestimmt wird, wobei der Waschvorgang und speziell der Dosiervorgang direkt und eindeutig im Zusammenhang mit der Wasserqualität (Wasserhärte) und dem Verschmutzungsgrad des Waschguts gesteuert oder geregelt wird. Eine zu geringe Dosierung des Waschmittels mit einem schlechteren Waschergebnis oder eine zu hohe Dosierung des Waschmittels mit einem schlechteren Waschergebnis und einer unnötigen Umweltbelastung und unnötigen Kosten kann vermieden werden.

Bei den Verfahren gemäß dem ersten und zweiten Ausführungsbeispiel stellt der Toleranzwert ε einen kleinen Wert dar, der einen Toleranzbereich ± ε um den Wert Null (siehe Fig. 10) bildet und der nach einer erwünschten Genauigkeit und/oder Schnelligkeit der Erfassung gewählt werden kann. Je kleiner der Toleranzwert ε gewählt wird, desto länger dauert die Erfassung der kritischen Mizellbildungskonzentration, wobei in Verbindung mit einem kleineren Toleranzwert ε auch kleinere Teilmengen des Waschmittels bestimmt werden sollen. Mit einem kleineren Toleranzwert ε ist jedoch das Erfassungsergebnis hinsichtlich der kritischen Mizellbildungskonzentration genauer. Somit kann bei beiden vorstehend beschriebenen Verfahren ein guter Ausgleich zwischen einer ausreichenden Genauigkeit und einer optimalen Schnelligkeit der Erfassungen gefunden werden.

Das Verfahren zur Bestimmung der Mizellbildungskonzentration gemäß dem ersten Ausführungsbeispiel ist ferner in der Weise vorteilhaft, dass es sehr einfach zu verwirklichen ist, da lediglich eine Erfassung bei einer diskreten Frequenz innerhalb eines vorbestimmten Frequenzbereichs erforderlich ist. Das Verfahren gemäß dem ersten Ausführungsbeispiel ist somit speziell vorteilhaft für zeitkritische Anwendungen.

Das Verfahren gemäß dem zweiten Ausführungsbeispiel bietet den weiteren Vorteil einer etwas größeren Genauigkeit, und ist somit speziell für sehr genaue Bestimmungen der kritischen Mizellbildungskonzentration vorgesehen. Mit der jeweiligen Erfassung einer nahezu vollständigen Impedanzkennlinie zur Bestimmung eines lokalen Tiefpunkts dieser Kennlinie ist der Aufwand und damit auch der Zeitbedarf größer.

Es besteht die Möglichkeit, beide Verfahren gemäß dem ersten und zweiten Ausführungsbeispiel miteinander zu kombinieren, da beide Verfahren auf denselben Sensor entsprechend der Vorrichtung 1 in den Figuren 1 und 2 zugreifen. Auch kann mit denselben elektronischen Verarbeitungseinrichtungen, wie der Steuerungseinrichtung 5 und der Speichereinrichtung 8, die Verarbeitung in beiden Fällen durchgeführt werden.

Eine Kombination beider Verfahren bietet den Vorteil, dass einerseits die Bestimmung der kritischen Mizellbildungskonzentration sowohl schnell als auch genau durchgeführt werden kann. Vorzugsweise werden die ersten Konzentrationsbestimmungen in der Situation, in der bei den beiden iterativen Verfahren weitere Teilmengen des Waschmittels hinzugefügt werden und die Messung von der kritischen Mizellbildungskonzentration noch entfernt ist, das schnellere Verfahren gemäß dem ersten Ausführungsbeispiel verwendet, während mit zunehmender Konzentration der Waschlauge im Sinne einer Erhöhung der Genauigkeit auf das Verfahren gemäß dem zweiten Ausführungsbeispiel umgestellt werden kann.

Beide Verfahren können entsprechend in Verbindung mit einem manuellen Eingriff verwendet werden, oder es kann ein Automatismus programmiert werden, entsprechend dem ab einer gewissen Größe der Steigung Z' (Betrag) und in Verbindung mit einem zweiten erweiterten Toleranzbereich das Eintreten der Größe des Betrags der Steigung Z' in diesen Toleranzbereich bestimmt wird und damit ein Umschalten bewirkt wird von dem Verfahren gemäß dem ersten Ausführungsbeispiel zu dem Verfahren gemäß dem zweiten Ausführungsbeispiel. Der Toleranzbereich ± ε bzw. der Toleranzwert ε kann für die beiden Ausführungsbeispiele gleich oder unterschiedlich sein.

## Patentansprüche

1. Verfahren zur Bestimmung einer Mizellbildungskonzentration, wobei das Verfahren in einer Wascheinrichtung (9) durchgeführt wird und die Wascheinrichtung eine zur Durchführung eines Waschvorgangs erforderliche Wassermenge aufweist, mit den Schritten:
- Zuführung einer Grundmenge eines Waschmittels zur Wassermenge zur Bildung einer Waschlauge (3) (Schritt 1),
- Erfassen einer Impedanz (Z1) bei einer vorbestimmten Frequenz (f1) mit einem Realteil (Re (Z1)) und einem Imaginärteil (Im (Z1)) (Schritt 2),
- Bestimmen eines Produkts (P1) aus dem Realteil (Re (Z1)) und dem Imaginärteil (Im (Z1)) der Impedanz (Z1) (Schritt 3),
- Hinzufügen einer weiteren Teilmenge (mn) des Waschmittels zur Waschlauge (3) (Schritt 4),
- Erfassen einer weiteren Impedanz (Z2) bei der vorbestimmten Frequenz (f1) mit einem Realteil (Re(Z2)) und einem Imaginärteil (Im (Z2)) der vorliegenden Waschlauge (Schritt 5),
- Bestimmen eines weiteren Produkts (P2) aus dem Realteil (Re(Z2)) und dem Imaginärteil (Im (Z2)) der weiteren Impedanz (Z2) (Schritt 6),
- Bestimmen einer Steigung (Z', Zn') zwischen den zuvor ermittelten Produkten (P1, P2) in Abhängigkeit von einer Waschlaugenkonzentration (c) (Schritt 7),
- Bestimmen, ob der Betrag der Steigung (Z', Zn') kleiner als ein oder gleich einem Toleranzwert (ε) ist und Wiederholen der Schritte 4 bis 8, falls der Betrag der Steigung (Z', Zn') größer als der Toleranzwert (ε) ist (Schritt 8), und
- Beenden des Verfahrens, wenn der Betrag der Steigung (Z') kleiner als der oder gleich dem Toleranzwert (ε) ist (Schritt 9).

2. Verfahren zur Bestimmung einer Mizellbildungskonzentration, wobei das Verfahren in einer Wascheinrichtung (9) durchgeführt wird und die Wascheinrichtung eine zur Durchführung eines Waschvorgangs erforderliche Wassermenge aufweist, mit den Schritten:
- Zuführung einer Grundmenge (m0) eines Waschmittels zur Wassermenge zur Bildung einer Waschlauge (3) (Schritt 1),
- Erfassen einer Impedanzkennlinie der Waschlauge (3) und Bestimmen einer Frequenz (fLTP1) eines lokalen Tiefpunkts (LTP) der Impedanzkennlinie,
- Bestimmen einer Impedanz (ZL1) bei der Frequenz (fLTP1) mit einem Realteil (Re (ZL1)) und einem Imaginärteil (Im (ZL1)) (Schritt 3),
- Bestimmen eines Produkts (PL1) aus dem Realteil und dem Imaginärteil der Impedanz (ZL1) (Schritt 4),
- Hinzufügen einer weiteren Teilmenge (mn) des Waschmittels zur Waschlauge (3) (Schritt 5),
- Bestimmen einer weiteren Impedanzkennlinie der vorliegenden Waschlauge (3) und Bestimmen einer Frequenz (fLPT2) eines lokalen Tiefpunkts (LTP) der Impedanzkennlinie (Schritt 6),
- Bestimmen einer Impedanz (ZL2) bei der Frequenz (fLPT2) mit einem Realteil (Re (ZL2)) und einem Imaginärteil (Im (ZL2)) (Schritt 7),
- Bestimmen eines Produkts (PL2) aus dem Realteil und dem Imaginärteil der Impedanz (ZL2) (Schritt 8),
- Bestimmen einer Steigung (Z', Zn') zwischen den zuvor ermittelten Produkten (PL1, PL2) in Abhängigkeit von der Waschlaugenkonzentration (c) (Schritt 9),
- Bestimmen, ob der Betrag der Steigung (Z', Zn') kleiner als oder gleich einem Toleranzwert (ε) ist, und Wiederholen der Schritte 4 bis 9, falls der Betrag der Steigung (Z', Zn') größer als der Toleranzwert (ε) ist, (Schritt 10), und
- Beenden des Verfahrens, wenn der Betrag der Steigung (Z') kleiner als der oder gleich dem Toleranzwert (ε) ist (Schritt 11).

3. Verfahren nach Anspruch 1 oder 2, wobei der Toleranzwert (ε) in Abhängigkeit von der erforderlichen Genauigkeit der Bestimmung der Mizellbildungskonzentration bestimmt wird, und die Genauigkeit mit kleiner werdendem Toleranzwert (ε) ansteigt.

4. Verfahren nach einem der Patentansprüche 1 bis 3, wobei das Hinzufügen einer weiteren Teilmenge (mn) des Waschmittels das Hinzufügen einer weiteren Grundmenge oder einer davon abweichenden vorbestimmten Menge des Waschmittels in die bestehende Waschlauge (3) umfasst.

5. Verfahren nach einem der Patentansprüche 1 bis 4, wobei die Steigung (Z', Zn') in einer Produktkennlinie (PK1, PK2) über der Konzentration (c) der Waschlauge (3) dargestellt wird, und die Steigung (Z') zwischen Werten des Produkts (P1, P2; PL1, PL2) gebildet wird, die aus zeitlich aufeinanderfolgenden Erfassungen hervorgehen.

6. Verfahren nach Anspruch 5, wobei die Steigung (Z') zwischen den Werten des Produkts (PL1, PL2), die aus zeitlich aufeinanderfolgenden Erfassungen hervorgehen, mittels eines numerischen Verfahrens ermittelt wird.

7. Verfahren nach Anspruch 2, wobei die Bestimmung der Impedanzkennlinien über einen gesamten Frequenzbereich (0 ≤ f ≤ fmax) zur Erfassung einer vollständigen Impedanzkennlinie oder über einen Teil des Frequenzbereichs durchgeführt wird, in dem der lokale Tiefpunkt (LTP) sicher erwartet wird.

8. Vorrichtung zur Bestimmung einer Mizellbildungskonzentration in einer Wascheinrichtung (9), wobei die Wascheinrichtung eine zur Durchführung eines Waschvorgangs erforderliche Wassermenge aufweist, mit:
- einer Einrichtung (5, 12) zum Zuführung einer Grundmenge eines Waschmittels zur Wassermenge zur Bildung einer Waschlauge (3),
- einer Einrichtung (5) zum Erfassen einer Impedanz (Z1) bei einer vorbestimmten Frequenz (f1) mit einem Realteil (Re (Z1)) und einem Imaginärteil (Im (Z1)),
- einer Einrichtung (5) zum Bestimmen eines Produkts (P1) aus dem Realteil (Re (Z1)) und dem Imaginärteil (Im (Z1)) der Impedanz (Z1),
- einer Einrichtung (5) zum Hinzufügen einer weiteren Teilmenge (mn) des Waschmittels zur Waschlauge (3),
- einer Einrichtung (5) zum Erfassen einer weiteren Impedanz (Z2) bei der vorbestimmten Frequenz (f1) mit einem Realteil (Re(Z2)) und einem Imaginärteil (Im (Z2)) der vorliegenden Waschlauge (3),
- einer Einrichtung (5) zum Bestimmen eines weiteren Produkts (P2) aus dem Realteil (Re(Z2)) und dem Imaginärteil (Im (Z2)) der weiteren Impedanz (Z2),
- einer Einrichtung (5) zum Bestimmen einer Steigung (Z', Zn') zwischen den zuvor ermittelten Produkten (P1, P2) in Abhängigkeit von einer Waschlaugenkonzentration (c),
- einer Einrichtung (5) zum Bestimmen, ob der Betrag der Steigung (Z', Zn') kleiner als ein oder gleich einem Toleranzwert (ε) ist und Wiederholen der Schritte 4 bis 8, falls der Betrag der Steigung (Z', Zn') größer als der Toleranzwert (ε) ist, und
- einer Einrichtung (5) zum Beenden des Verfahrens, wenn der Betrag der Steigung (Z') kleiner als der oder gleich dem Toleranzwert (ε) ist.

9. Vorrichtung zur Bestimmung einer Mizellbildungskonzentration in einer Wascheinrichtung (9), wobei die Wascheinrichtung eine zur Durchführung eines Waschvorgangs erforderliche Wassermenge aufweist, mit:
- einer Einrichtung (5, 12) zum Zuführung einer Grundmenge (m0) eines Waschmittels zur Wassermenge zur Bildung einer Waschlauge (3),
- einer Einrichtung (5) zum Erfassen einer Impedanzkennlinie der Waschlauge (3) und Bestimmen einer Frequenz (fLTP1) eines lokalen Tiefpunkts (LTP) der Impedanzkennlinie,
- einer Einrichtung (5) zum Bestimmen einer Impedanz (ZL1) bei der Frequenz (fLTP1) mit einem Realteil (Re (ZL1)) und einem Imaginärteil (Im (ZL1)),
- einer Einrichtung (5) zum Bestimmen eines Produkts (PL1) aus dem Realteil und dem Imaginärteil der Impedanz (ZL1),
- einer Einrichtung (5, 12) zum Hinzufügen einer weiteren Teilmenge (mn) des Waschmittels zur Waschlauge (3),
- einer Einrichtung (5) zum Bestimmen einer weiteren Impedanzkennlinie der vorliegenden Waschlauge (3) und Bestimmen einer Frequenz (fLPT2) eines lokalen Tiefpunkts (LTP) der Impedanzkennlinie,
- einer Einrichtung (5) zum Bestimmen einer Impedanz (ZL2) bei der Frequenz (fLPT2) mit einem Realteil (Re (ZL2)) und einem Imaginärteil (Im (ZL2)),
- einer Einrichtung (5) zum Bestimmen eines Produkts (PL2) aus dem Realteil und dem Imaginärteil der Impedanz (ZL2),
- einer Einrichtung (5) zum Bestimmen einer Steigung (Z', Zn') zwischen den zuvor ermittelten Produkten (PL1, PL2) in Abhängigkeit von der Waschlaugenkonzentration (c),
- einer Einrichtung (5) zum Bestimmen, ob der Betrag der Steigung (Z', Zn') kleiner als oder gleich einem Toleranzwert (ε) ist, und Wiederholen der Schritte 4 bis 9, falls der Betrag der Steigung (Z', Zn') größer als der Toleranzwert (ε) ist, und
- einer Einrichtung (5) zum Beenden des Verfahrens, wenn der Betrag der Steigung (Z') kleiner als der oder gleich dem Toleranzwert (ε) ist.

10. Computerprogramm zum Erzeugen der Schritte gemäß Patentanspruch 1, wenn das Computerprogramm in einer Computervorrichtung ausgeführt wird.

11. Computerprogramm zum Erzeugen der Schritte gemäß Patentanspruch 2, wenn das Computerprogramm in einer Computervorrichtung ausgeführt wird.

## Claims

1. Method for determining micelle concentrations, wherein the method is carried out in a washing apparatus (9) and said washing apparatus has a quantity of water required for carrying out a washing process, the method comprising the steps of:
- supplying a basic quantity of a detergent to the quantity of water to form a lye (3) (step 1),
- measuring an impedance (Z1), comprising a real part (Re (Z1)) and an imaginary part (Im (Z1)), at a pre-determined frequency (f1) (step 2),
- determining a product (P1) of the real part (Re (Z1)) and the imaginary part (Im (Z1)) of the impedance (Z1) (step 3),
- adding a further partial quantity (mn) of the detergent to the lye (3) (step 4),
- measuring a further impedance (Z2), comprising a real part (Re(Z2)) and an imaginary part (Im (Z2)), of the present lye at a pre-determined frequency (f1) (step 5),
- determining a further product (P2) of the real part (Re(Z2)) and the imaginary part (Im (Z2)) of the further impedance (Z2) (step 6),
- determining a gradient (Z', Zn') between the previously established products (P1, P2) as a function of a lye concentration (c) (step 7),
- determining whether the amount of the gradient (Z', Zn') is smaller than or equal to a tolerance value (ε) and repeating steps 4 to 8 if the amount of the gradient (Z', Zn') is greater than the tolerance value (ε) (step 8), and
- concluding the method when the amount of the gradient (Z') is smaller than or equal to the tolerance value (ε) (step 9).

2. Method for determining micelle concentrations, wherein the method is carried out in a washing apparatus (9) and said washing apparatus has a quantity of water required for carrying out a washing process, the method comprising the steps of:
- supplying a basic quantity (m0) of a detergent to the quantity of water to form a lye (3) (step 1),
- recording an impedance characteristic curve of the lye (3) and determining a frequency (fLTP1) of a local trough (LTP) of the impedance characteristic curve,
- determining an impedance (ZL1), comprising a real part (Re (ZL1)) and an imaginary part (Im (ZL1)), at the frequency (fLTP1) (step 3),
- determining a product (PL1) of the real part and the imaginary part of the impedance (ZL1) (step 4),
- adding a further partial quantity (mn) of the detergent to the lye (3) (step 5),
- determining a further impedance characteristic curve of the present lye (3) and determining a frequency (fLTP2) of a local trough (LTP) on the impedance characteristic curve (step 6),
- determining an impedance (ZL2), comprising a real part (Re (ZL2)) and an imaginary part (Im (ZL2)), at the frequency (fLPT2) (step 7),
- determining a product (PL2) of the real part and the imaginary part of the impedance (ZL2) (step 8),
- determining a gradient (Z', Zn') between the previously established products (PL1, PL2) as a function of the lye concentration (c) (step 9),
- determining whether the amount of the gradient (Z', Zn') is smaller than or equal to a tolerance value (ε) and repeating steps 4 to 9 if the amount of the gradient (Z', Zn') is greater than the tolerance value (ε) (step 10), and
- concluding the method when the amount of the gradient (Z') is smaller than or equal to the tolerance value (ε) (step 11).

3. Method according to either claim 1 or 2, wherein the tolerance value (ε) is determined as a function of the accuracy required to determine the micelle concentration and the accuracy increases as the tolerance value (ε) decreases.

4. Method according to any of claims 1 to 3, wherein adding a further partial quantity (mn) of the detergent comprises adding a further basic quantity or a different pre-determined quantity of the detergent to the existing lye (3).

5. Method according to any of claims 1 to 4, wherein the gradient (Z', Zn') of a product characteristic curve (PK1, PK2) is represented by the concentration (c) of the lye (3), said gradient (Z') being formed between values of the product (P1, P2; PL1, PL2) resulting from chronologically successive measurements.

6. Method according to claim 5, wherein the gradient (Z') between the values of the product (PL1, PL2) resulting from chronologically successive measurements is calculated by means of a numeric method.

7. Method according to claim 2, wherein the impedance characteristic curve is determined either across an entire frequency range (0 ≤ f ≤ fmax) to determine a complete impedance characteristic curve or across a portion of the frequency range in which the local trough (LTP) is confidently expected to be.

8. Device for determining micelle concentrations in a washing apparatus (9), wherein said washing apparatus has a quantity of water required for carrying out a washing process, comprising:
- an apparatus (5, 12) for supplying a basic quantity of a detergent to the quantity of water to form a lye (3),
- an apparatus (5) for measuring an impedance (Z1), comprising a real part (Re (Z1)) and an imaginary part (Im (Z1)), at a pre-determined frequency (f1),
- an apparatus (5) for determining a product (P1) of the real part (Re (Z1)) and the imaginary part (Im (Z1)) of the impedance (Z1),
- an apparatus (5) for adding a further partial quantity (mn) of the detergent to the lye (3),
- an apparatus (5) for measuring a further impedance (Z2), comprising a real part (Re(Z2)) and an imaginary part (Im (Z2)), of the present lye (3) at a pre-determined frequency (f1),
- an apparatus (5) for determining a further product (P2) of the real part (Re (Z2)) and the imaginary part (Im (Z2)) of the further impedance (Z2),
- an apparatus (5) for determining a gradient (Z', Zn') between the previously established products (P1, P2) as a function of a lye concentration (c),
- an apparatus (5) for determining whether the amount of the gradient (Z', Zn') is smaller than or equal to a tolerance value (ε) and repeating steps 4 to 8 if the amount of the gradient (Z', Zn') is greater than the tolerance value (ε), and
- an apparatus (5) for concluding the method when the amount of the gradient (Z') is smaller than or equal to the tolerance value (ε).

9. Device for determining micelle concentrations in a washing apparatus (9), wherein said washing apparatus has a quantity of water required for carrying out a washing process, comprising:
- an apparatus (5, 12) for supplying a basic quantity (m0) of a detergent to the quantity of water to form a lye (3),
- an apparatus (5) for recording an impedance characteristic curve of the lye (3) and determining a frequency (fLTP1) of a local trough (LTP) on the impedance characteristic curve,
- an apparatus (5) for determining an impedance (ZL1) at the frequency (fLTP1) comprising a real part (Re (ZL1)) and an imaginary part (Im (ZL1)),
- an apparatus (5) for determining a product (PL1) of the real part and the imaginary part of the impedance (ZL1),
- an apparatus (5, 12) for adding a further partial quantity (mn) of the detergent to the lye (3),
- an apparatus (5) for determining a further impedance characteristic curve of the present lye (3) and determining a frequency (fLTP2) of a local trough (LTP) on the impedance characteristic curve,
- an apparatus (5) for determining an impedance (ZL2), comprising a real part (Re (ZL2)) and an imaginary part (Im (ZL2)), at the frequency (fLPT2),
- an apparatus (5) for determining a product (PL2) of the real part and the imaginary part of the impedance (ZL2),
- an apparatus (5) for determining a gradient (Z', Zn') between the previously established products (PL1, PL2) as a function of the lye concentration (c),
- an apparatus (5) for determining whether the amount of the gradient (Z', Zn') is smaller than or equal to a tolerance value (ε) and repeating steps 4 to 9 if the amount of the gradient (Z', Zn') is greater than the tolerance value (ε), and
- an apparatus (5) for concluding the method when the amount of the gradient (Z') is smaller than or equal to the tolerance value (ε).

10. Computer program for generating the steps according to claim 1 if the computer program is run on a computer device.

11. Computer program for generating the steps according to claim 2 if the computer program is run on a computer device.

## Revendications

1. Procédé de détermination d'une concentration de formation de micelles, dans lequel le procédé est réalisé dans un dispositif de lavage (9) et le dispositif de lavage présente une quantité d'eau nécessaire pour la réalisation d'une opération de lavage, avec les étapes consistant à :
- fournir une quantité de base d'un agent de lavage à la quantité d'eau pour former une lessive de lavage (3) (étape 1),
- détecter une impédance (Z1) à une fréquence prédéterminée (f1) avec une partie réelle (Re (Z1)) et une partie imaginaire (Im (Z1)) (étape 2),
- déterminer un produit (P1) à partir de la partie réelle (Re (Z1)) et de la partie imaginaire (Im (Z1)) de l'impédance (étape 3),
- additionner une autre quantité partielle (mn) de l'agent de lavage à la lessive de lavage (3) (étape 4),
- détecter une autre impédance (Z2) à la fréquence prédéterminée (f1) avec une partie réelle (Re(Z2)) et une partie imaginaire (Im (Z2)) de la lessive de lavage présente (étape 5),
- déterminer un autre produit (P2) à partir de la partie réelle (Re(Z2)) et de la partie imaginaire (Im (Z2)) de l'autre impédance (Z2) (étape 6),
- déterminer une augmentation (Z', Zn') entre les produits obtenus auparavant (P1, P2) en fonction d'une concentration de lessive de lavage (c) (étape 7),
- déterminer si le degré d'augmentation (Z', Zn') est inférieur ou égal à une valeur de tolérance (ε) et répéter les étapes 4 à 8 au cas où le degré d'augmentation (Z', Zn') est supérieur à la valeur de tolérance (ε) (étape 8) et
- terminer le procédé lorsque le degré d'augmentation (Z') est inférieur ou égal à la valeur de tolérance (ε) (étape 9).

2. Procédé de détermination d'une concentration de formation de micelles, dans lequel le procédé est réalisé dans un dispositif de lavage (9) et le dispositif de lavage présente une quantité d'eau nécessaire pour la réalisation d'une opération de lavage, avec les étapes consistant à :
- fournir une quantité de base (m0) d'un agent de lavage à la quantité d'eau pour former une lessive de lavage (3) (étape 1),
- détecter une caractéristique d'impédance de la lessive de lavage (3) et déterminer une fréquence (fLTP1) d'un point bas local (LTP) de la caractéristique d'impédance,
- déterminer une impédance (ZL1) à la fréquence (fLTP1) avec une partie réelle (Re (ZL1)) et une partie imaginaire (Im (ZL1)) (étape 3),
- déterminer un produit (PL1) à partir de la partie réelle et de la partie imaginaire de l'impédance (ZL1) (étape 4),
- additionner une autre quantité partielle (mn) de l'agent de lavage à la lessive de lavage (3) (étape 5),
- déterminer une autre caractéristique d'impédance de la lessive de lavage présente (3) et déterminer une fréquence (fLPT2) d'un point bas local (LTP) de la caractéristique d'impédance (étape 6),
- déterminer une impédance (ZL2) à la fréquence (fLPT2) avec une partie réelle (Re (ZLD2)) et une partie imaginaire (Im (ZL2)) (étape 7),
- déterminer un produit (PL2) à partir de la partie réelle et de la partie imaginaire de l'impédance (ZL2) (étape 8),
- déterminer une augmentation (Z', Zn') entre les produits déterminés auparavant (PL1, PL2) en fonction de la concentration de lessive de lavage (c) (étape 9),
- déterminer si le degré d'augmentation (Z', Zn') est inférieur ou égal à une valeur de tolérance (ε) et répéter les étapes 4 à 9 au cas où le degré d'augmentation (Z', Zn') est supérieur à la valeur de tolérance (ε) (étape 10) et
- terminer le procédé lorsque le degré d'augmentation (Z') est inférieur ou égal à la valeur de tolérance (ε) (étape 11).

3. Procédé selon la revendication 1 ou 2, dans lequel la valeur de tolérance (ε) est déterminée en fonction de la précision requise de la détermination de la concentration de formation de micelles et la précision augmente avec la valeur de tolérance (ε) à mesure qu'elle devient plus petite.

4. Procédé selon l'une quelconque des revendications 1 à 3, dans lequel l'addition d'une autre quantité partielle (mn) de l'agent de lavage comprend l'addition d'une autre quantité de base ou d'une quantité prédéterminée de l'agent de lavage s'écartant de celle-ci dans la lessive de lavage existante (3).

5. Procédé selon l'une quelconque des revendications 1 à 4, dans lequel l'augmentation (Z', Zn') dans une caractéristique de produit (PK1, PK2) est représentée via la concentration (c) de la lessive de lavage (3) et l'augmentation (Z') est formée entre les valeurs du produit (P1, P2 ; PL1, PL2) qui ressortissent à des détections successives dans le temps.

6. Procédé selon la revendication 5, dans lequel l'augmentation (Z') entre les valeurs du produit (PL1, PL2) qui ressortissent à des détections successives dans le temps, est déterminée au moyen d'un procédé numérique.

7. Procédé selon la revendication 2, dans lequel la détermination des caractéristiques d'impédance est réalisée sur une plage de fréquences totale (0 ≤ f ≤ fmax) pour détecter une caractéristique d'impédance complète ou via une partie de la plage de fréquences dans laquelle le point bas local (LTP) est escompté de manière certaine.

8. Dispositif de détermination d'une concentration de formation de micelles dans un dispositif de lavage (9), dans lequel le dispositif de lavage présente une quantité d'eau nécessaire pour réaliser une opération de lavage, comprenant :
- un dispositif (5, 12) pour fournir une quantité de base d'un agent de lavage à la quantité d'eau pour la formation d'une lessive de lavage (3),
- un dispositif (5) pour détecter une impédance (Z1) à une fréquence prédéterminée (f1) avec une partie réelle (Re (Z1)) et une partie imaginaire (Im (Z1)),
- un dispositif (5) pour déterminer un produit (P1) à partir de la partie réelle (Re (Z1)) et la partie imaginaire (Im (Z1)) de l'impédance (Z1),
- un dispositif (5) pour additionner une autre quantité partielle (mn) de l'agent de lavage à la lessive de lavage (3),
- un dispositif (5) pour détecter une autre impédance (Z2) à la fréquence prédéterminée (f1) avec une partie réelle (Re(Z2)) et une partie imaginaire (Im (Z2)) de la lessive de lavage présente (3),
- un dispositif (5) pour déterminer un autre produit (P2) à partir de la partie réelle (Re(Z2)) et la partie imaginaire (Im (Z2)) de l'autre impédance (Z2),
- un dispositif (5) pour déterminer une augmentation (Z', Zn') entre les produits déterminés auparavant (P1, P2) en fonction d'une concentration de lessive de lavage (c),
- un dispositif (5) pour déterminer si le degré d'augmentation (Z', Zn') est inférieur ou égal à une valeur de tolérance (ε) et répéter les étapes 4 à 8 au cas où le degré d'augmentation (Z', Zn') est supérieur à la valeur de tolérance (ε) et
- un dispositif (5) pour terminer le procédé lorsque le degré d'augmentation (Z') est inférieur ou égal à la valeur de tolérance (ε).

9. Dispositif de détermination d'une concentration de formation de micelles dans un dispositif de lavage (9), dans lequel le dispositif de lavage présente une quantité d'eau nécessaire pour réaliser une opération de lavage, comprenant :
- un dispositif (5, 12) pour fournir une quantité de base (m0) d'un agent de lavage à la quantité d'eau pour la formation d'une lessive de lavage (3),
- un dispositif (5) pour détecter une caractéristique d'impédance de la lessive de lavage (3) et déterminer une fréquence (fLTP1) d'un point bas local (LTP) de la caractéristique d'impédance,
- un dispositif (5) pour déterminer une impédance (ZL1) à la fréquence (fLTP1) avec une partie réelle (Re (ZL1)) et une partie imaginaire (Im (ZL1),
- un dispositif (5) pour déterminer un produit (PL1) à partir de la partie réelle et de la partie imaginaire de l'impédance (ZL1),
- un dispositif (5, 12) pour additionner une autre quantité partielle (mn) de l'agent de lavage à la lessive de lavage (3),
- un dispositif (5) pour détecter une autre caractéristique d'impédance de la lessive de lavage présente (3) et déterminer une fréquence (fLPT2) d'un point bas local (LTP) de la caractéristique d'impédance,
- un dispositif (5) pour déterminer une impédance (ZL2) à la fréquence (fLPT2) avec une partie réelle (Re (ZL2)) et une partie imaginaire (Im (ZL2)),
- un dispositif (5) pour déterminer un autre produit (PL2) à partir de la partie réelle et la partie imaginaire de l'impédance (ZL2),
- un dispositif (5) pour déterminer une augmentation (Z', Zn') entre les produits déterminés auparavant (PL1, PL2) en fonction de la concentration de lessive de lavage (c),
- un dispositif (5) pour déterminer si le degré d'augmentation (Z', Zn') est inférieur ou égal à une valeur de tolérance (ε) et répéter les étapes 4 à 9 au cas où le degré d'augmentation (Z', Zn') est supérieur à la valeur de tolérance (ε) et
- un dispositif (5) pour terminer le procédé lorsque le degré d'augmentation (Z') est inférieur ou égal à la valeur de tolérance (ε).

10. Programme d'ordinateur pour la production des étapes selon la revendication 1 lorsque le programme d'ordinateur est exécuté dans un ordinateur.

11. Programme d'ordinateur pour la production des étapes selon la revendication 2 lorsque le programme d'ordinateur est exécuté dans un ordinateur.
